# EUROPEAN PATENT SPECIFICATION

(11) **EP 3 134 977 B1**
(45) Date of publication and mention of the grant of the patent: **04.12.2019**
(21) Application number: 15782612.4
(22) Date of filing: 24.04.2015
(51) Int. Cl.: H04L 1/18, H04L 5/00, H04L 5/14, H04W 72/04

(54) **METHOD AND APPARATUS FOR COMMUNICATING DATA ON PHYSICAL DOWNLINK SHARED CHANNEL**
VERFAHREN UND VORRICHTUNG ZUR ÜBERTRAGUNG VON DATEN IN EINEM PHYSISCHEN GETEILTEN DOWNLINK-KANAL
PROCÉDÉ ET APPAREIL DE COMMUNICATION DE DONNÉES SUR UN CANAL PHYSIQUE PARTAGÉ DE LIAISON DESCENDANTE

(30) Priority: 25.04.2014 CN 201410171110
(43) Date of publication of application: 01.03.2017
(73) Proprietor: Samsung Electronics Co., Ltd., Gyeonggi-do 16677 (KR)
(72) Inventor: FU, Jingxing, Beijing 100125 (CN); LI, Yingyang, Beijing 100125 (CN); ZHANG, Shichang, Beijing 100125 (CN)
(74) Representative: Nederlandsch Octrooibureau
(86) International application number: PCT/KR2015/004099
(87) International publication number: WO 2015/163722

(56) References cited:
- US-A1- 2007 248 043
- US-A1- 2012 063 373
- US-A1- 2013 242 824
- US-A1- 2013 343 239
- HUAWEI ET AL: "SPS Issues for eIMTA", 3GPP DRAFT; R2-141590 SPS ISSUES FOR EIMTA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2 22 March 2014 (2014-03-22), XP050792743, Retrieved from the Internet: URL:http://www.3gpp.org/ftp/Meetings_3GPP_ SYNC/RAN2/Docs/ [retrieved on 2014-03-22]
- HUAWEI ET AL: "Motivation of New SI", 3GPP DRAFT; RP-140426 MOTIVATION FOR FLEXIBLE DUPLEX, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Fukuoka, Japan; 20140303 - 20140306 3 March 2014 (2014-03-03), XP050781404, Retrieved from the Internet: URL:http://www.3gpp.org/ftp/Meetings_3GPP_ SYNC/RAN/Docs/ [retrieved on 2014-03-03]
- LG ELECTRONICS: "Summary of email discussion on DL HARQ timing for TDD-FDD carrier aggregation with self-carrier scheduling", 3GPP DRAFT; R1-140315 EMAIL SUMMARY - [75-08] SELF SCHEDULING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 11 February 2014 (2014-02-11), XP050736356, Retrieved from the Internet: URL:http://www.3gpp.org/ftp/Meetings_3GPP_ SYNC/RAN/RAN1/Docs/ [retrieved on 2014-02-11]
- HUAWEI ET AL.: 'Motivation of New SI proposal: Evolving LTE with Flexible Duplex for Traffic Adaptation' RP-140426, 3GPP TSG RAN MEETING #63 03 March 2014, FUKUOKA, JAPAN, XP050781404
- SAMSUNG ET AL: "CP length of P-SCH for LTE Type 2", 3GPP DRAFT; R1-080541, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sevilla, Spain; 20080119, 19 January 2008 (2008-01-19), XP050109051, [retrieved on 2008-01-19]

## Description

### [Technical Field]

The present disclosure relates a radio communication system technology, and more particularly, to a physical downlink shared channel (PDSCH) transmission method and device on a pair of carriers.

### [Background Art]

The long term evolution (LTE) system of a 3rd generation partnership project (3GPP) standardization organization supports frequency division duplexing (FDD) and time division duplex (TDD). As for the above two duplex modes, length of each radio frame is 10ms. The radio frame includes ten sub-frames, each of which is 1ms. Each sub-frame consists of two consecutive time slots, each of which is 0.5ms. That is, the k-th sub-frame includes: time slot (2k) and time slot (2k+1).

As for an LTE FDD system, uplink (UL) and downlink (DL) transmission is borne by two symmetrical spectra. Therefore, at each moment, a UL sub-frame and a DL sub-frame may co-exist. As for an LTE TDD system, the UL and DL transmission is borne by a same spectrum. The UL transmission and the DL transmission may be distinguished by time. That is, different sub-frames of system frames are respectively defined as a UL sub-frame, DL sub-frame or a special sub-frame (a sub-frame consisting of a downlink pilot time slot (DwPTS), a guard period (GP) and an uplink pilot time slot (UpPTS)) according to different configurations. The existing LTE TDD system supports seven kinds of UL and DL configurations. Referring to table 1, D represents a DL sub-frame, U represents a UL sub-frame and S represents a special sub-frame. 3GPP contribution R1-141590, "SPS ISSUES FOR EIMTA" of Huawei discloses flexible duplex for TDD by reconfiguration (change of TDD UL/DL configuration) for some of the subframes, where DL SPS release is used.

**[Table 1]**

| Configuration number | Conversion point period | Sub-frame sequence number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

### Table 1 TDD UL and DL configuration

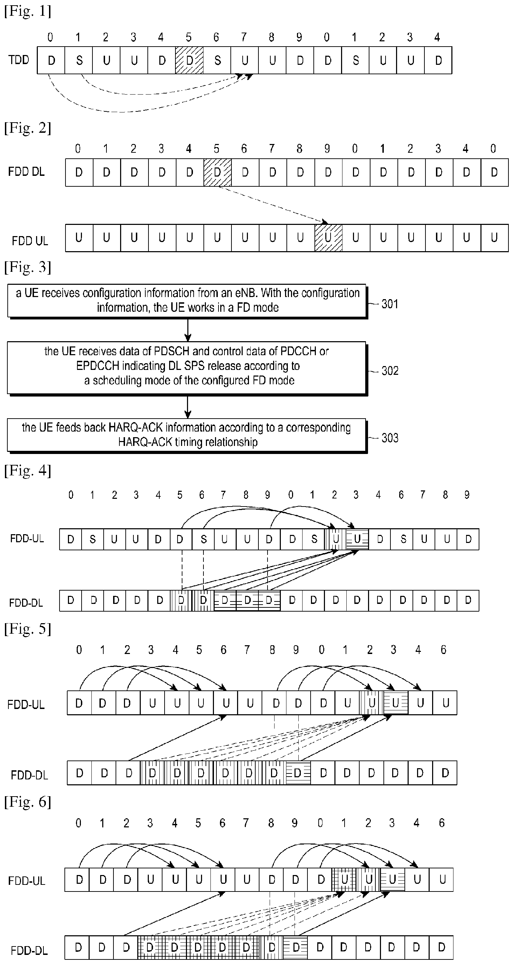

As for a TDD single service cell system, control data of a physical downlink control channel (PDCCH) or control data of an enhanced physical downlink control channel (EPDCCH) may be received on a sub-frame (n-k) of a same carrier and data of a physical downlink shared channel (PDSCH) may be further received on the sub-frame (n-k) of the same carrier. As shown in figure 1, a hybrid automatic repeat request-acknowledge (HARQ-ACK) of the PDSCH may be fed back on a UL sub-frame n of a same carrier. As shown in table 2, as for a TDD system, a value of k is determined by a TDD UL and DL configuration.

### Table 2

**[Table 2]**

| Configuration number | Sub-frame sequence number *n* | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | - | 4 | - | - | 6 | - | 4 |
| 1 | - | - | 7,6 | 4 | - | - | - | 7,6 | 4 | - |
| 2 | - | - | 8,7,4,6 | - | - | - | - | 8,7,4, 6 | - | - |
| 3 | - | - | 7,6,11 | 6,5 | 5, 4 | - | - | - | - | - |
| 4 | - | - | 12, 8, 7, 11 | 6, 5, 4, 7 | - | - | - | - | - | - |
| 5 | - | - | 13, 12, 9, 8, 7, 5, 4, 11,6 | - | - | - | - | - | - | - |
| 6 | - | - | 7 | 7 | 5 | - | - | 7 | 7 | - |

### Table 2 Index K: {k₀,k₁,...k_{M-1}} of a DL associate set of the TDD system

As for an FDD single service cell system, as shown in figure 2, data of the PDSCH and control data of the PDCCH or EPDCCH indicating DL semi-persistent scheduling (SPS) release may be received on a sub-frame (n-k) of a DL carrier and an HARQ-ACK of the PDSCH may be fed back on a UL sub-frame n of a UL carrier. As for an FDD system, the value of K equals to 4. The HARQ-ACK information of multiple DL sub-frames is transmitted on a same UL sub-frame. These DL sub-frames belong to a same HARQ-ACK DL associate set. That is, these DL sub-frames belong to a same HARQ-ACK bundle window. The DL associate set may be described in detail in the 3GPP 36.213. That is, a set of all DL sub-frames transmitting the HARQ-ACK information on the PUCCH of a same UL sub-frame is called the DL associate set.

With the enhancement of requirements put forward by a user on transmission rate of the data, LTE-A technologies are developed. In the LTE-A, as for the TDD system, a TDD re-configuration technology is introduced, i.e. the TDD UL and DL configuration is dynamically adjusted via signaling so that a ratio of UL sub-frames and DL sub-frames is more aligned with a ratio of UL service amount and DL service amount, which benefits a UL and DL peak rate of the user and increases throughput of the system. As for the FDD system, the UL and DL may adopt different carriers. When the UL service amount and the DL service amount is unbalanced, such as the DL service mount is more than the UL service amount, UL carrier resources of the FDD may be wasted. Therefore, it may be taken into consideration that some sub-frames in the FDD UL carrier may be used as the DL sub-frames, which is called a hybrid duplex system. This technology may enhance the UL and DL peak rate of the user and enhance the throughput of the system.

In the LTE-A, multiple component carriers (CC)s may be combined, i.e., carrier aggregation (CA) to obtain more bandwidth to form UL and DL links of the communication system and support a higher transmission rate. As for a UE, an eNB make a configuration to make the UE work in multiple cells. One of the cells is a primary cell (Pcell) and the other cells are secondary cells (Scell)s. A PDSCH of a cell may be scheduled by an (E)PDCCH transmitted by the same cell, which is called self-scheduling. In another example, the PDSCH of the cell may be scheduled by an (E)PDCCH transmitted by another cell, which is called cross-carrier scheduling. The cell transmitting the (E)PDCCH is called a scheduling cell and the cell transmitting the PDSCH is called a scheduled cell.

However, the scheduling method of the DL sub-frame in the FDD UL carrier, the scheduling method of the DL sub-frame in the FDD DL carrier and the transmission method of the HARQ-ACK information of the DL sub-frame are to-be-researched problems.

### Disclosure of Invention

### Technical Problem

In the conventional FDD system, each cell may include a pair of carriers, which may respectively be used for UL transmission and DL transmission. In the conventional FDD system, the duplex direction of each carrier is fixed and the bandwidth of the two carriers is the same. That is, the ratio of the UL physical resource and the DL physical resource is 1:1. However, as for practical services, in most situations, the DL services are significantly more than the UL services. For instance, the DL services are 37 times the amount of the UL services.

### Solution to Problem

In accordance with one aspect of the present disclosure, a method for comunicating data on physical downlink shared channel (PDSCH) is provided. The method is includes: receiving, by a user equipment (UE), configuration information, with which the UE works in a flexible duplex (FD) mode, receiving, by the UE, data of a PDSCH and control data of a physical downlink control channel (PDCCH) or enhanced physical downlink control channel (EPDCCH) indicating downlink (DL) semi-persistent scheduling (SPS) release according to a scheduling mode of the FD mode;, and feeding back, by the UE, hybrid automatic repeat request-acknowledge (HARQ-ACK) information according to a corresponding HARQ-ACK timing.

In accordance with one aspect of the present disclosure, a user device is provided. The user device is includes: a configuration module, a receiving module and a feedback module wherein the configuration module is to receive configuration information, with which a UE works in a flexible duplex (FD) mode, the receiving module is to receive data of a physical downlink shared channel (PDSCH) and control data of a physical downlink control channel (PDCCH) or enhanced physical downlink control channel (EPDCCH) indicating downlink (DL) semi-persistent scheduling (SPS) release according to a scheduling mode of the FD mode, and the feedback module is to feed back hybrid automatic repeat request-acknowledge (HARQ-ACK) information according to an HARQ-ACK timing.

### Advantageous Effects of Invention

Embodiments of the present disclosure provide a PDSCH transmission method and device, by which DL data may be transmitted in some sub-frames in a UL carrier of the FDD, UL and DL peak rate of the user may be enhanced and throughput of the system may be enhanced.
The invention is defined by the independent claims. The embodiments not fully falling within the scope of the claims shall be understood as examples useful for understanding the invention.

### Brief Description of Drawings

Figure 1 is a diagram illustrating HARQ-ACK timing of a TDD system;
Figure 2 is a diagram illustrating HARQ-ACK timing of an FDD system;
Figure 3 is a flow chart illustrating a PDSCH scheduling method in accordance with an embodiment of the present disclosure;
Figure 4 is diagram illustrating an HARQ-ACK timing in accordance with an embodiment of the present disclosure;
Figure 5 is a diagram illustrating another HARQ-ACK timing in accordance with an embodiment of the present disclosure;
Figure 6 is a diagram illustrating another HARQ-ACK timing in accordance with an embodiment of the present disclosure;
Figure 7 is a diagram illustrating a soft buffer in accordance with an embodiment of the present disclosure; and
Figure 8 is a diagram illustrating structure of a user device in accordance with an embodiment of the present disclosure.

### Mode for the Invention

To make the objective and technical solution of the examples of the present disclosure more apparent, the present disclosure may be described in detail with reference to accompanying figures.

In the conventional FDD system, each cell may include a pair of carriers, which may respectively be used for UL transmission and DL transmission. In the conventional FDD system, the duplex direction of each carrier is fixed and the bandwidth of the two carriers is the same. That is, the ratio of the UL physical resource and the DL physical resource is 1:1. However, as for practical services, in most situations, the DL services are significantly more than the UL services. For instance, the DL services are 37 times the amount of the UL services.

In order to match the change of the UL and DL services, as for a cell formed by two carriers, sub-frames of two duplex directions may be allocated to one of the carriers. In another example, it may be allowed that sub-frames of two duplex directions may be respectively allocated to each carrier. Here, two carriers of the cell may be a pair of carriers, which may be applied to the FDD cell. The two carriers of the cell may not be limited to the pair of carriers, which may be applied to the FDD cell. In the present disclosure, such system may be called a flexible duplex (FD) system. Accordingly, such cell may be called a FD cell. A UE supporting the FD scheme may be called a FD UE.

Figure 3 is a flow chart illustrating a method for communicating data on a PDSCH in accordance with an embodiment of the present disclosure. Following blocks are included.

In block 301, a UE may receive configuration information from an eNB. With the configuration information, the UE may work in a FD mode.

In block 302, the UE may receive data of PDSCH and control data of PDCCH or EPDCCH indicating DL SPS release according to a scheduling mode of the configured FD mode.

In block 303, the UE may feed back HARQ-ACK information according to a corresponding HARQ-ACK timing.

In this embodiment of the present disclosure, as for a FD cell, a pair of carriers of the FD cell may be respectively recorded as FD-DL and FD-UL. When a backward FDD UE may access the FD cell, the FD-DL is used for DL transmission of the backward FDD UE. The FD-UL may be used for the UL transmission of the backward FDD UE. According to requirements of the service, in a typical scenario, the DL services may be more than the UL services. Therefore, some sub-frames of the FD-UL may be used for transmitting DL data. However, in some special scenario, the UL service may be more than the DL services, in this situation, some sub-frames of the FD-DL may be used for transmitting UL data.

According to the above analysis, in order to adapt to changes in business, there may be following situations.

The first situation may be that change of the UL or DL direction may be performed for some sub-frames of the FD-UL carrier and the direction of all sub-frames of the FD-DL may be fixed as the DL.

The second situation may be that the UL or DL direction of two carriers (FD-UL or FD-DL) of the FD cell may be changed. However, when the UL or DL direction of some sub-frames of one of the two carriers is changed, the UL or DL direction of all sub-frames of the other carrier is kept unchanged.

As for the above second situation, when the needed UL sub-frame resources are less than or equal to the needed DL sub-frame resources, in one period, some sub-frames in the FD-UL may be configured as the DL sub-frames or special sub-frame and all sub-frames in the FD-DL are DL sub-frames. When the needed UL sub-frame resources are more than the needed DL sub-frame resources, in one period, the direction of all sub-frames in the FD-UL may be UL and some sub-frames in the FD-DL may be configured as the UL sub-frames. The above period may be fixed number of sub-frames, one radio frame or multiple radio frames.

The technical scheme of the present disclosure may be described in detail hereinafter via several preferred embodiments.

### Embodiment one

In this embodiment, the UL or DL direction of some sub-frames of the FD-UL carrier may be changed. The sub-frames of the FD-UL carrier may be changed to DL sub-frames or special sub-frames, while all sub-frames of the FD-DL may be configured as the DL sub-frames. The UE may obtain sub-frame configuration information of the FD-UL carrier via receiving system information or high-layer signaling. The sub-frame configuration information may include: position of a sub-frame, the UL or DL direction of which may be changed, in the FD-UL carrier.

A sub-frame configuration mode of the FD-UL carrier may be that some sub-frames of the FD-UL radio frame may be changed as the DL sub-frames or special sub-frames and the changed UL and DL sub-frames are distributed in a period of 10ms. For instance, the changed UL and DL distribution of each radio frame may be one of the current seven TDD UL and DL configurations, such as TDD UL and DL configuration A, A=0,1,2,3,4,5 or 6, or sub-frame distribution including 7, 8, 9 or 10 UL sub-frames in the period of 10ms.

Another sub-frame configuration mode of the FD-UL carrier may be that some sub-frames of the FD-UL carrier may be changed as the DL sub-frames or special sub-frames and the changed DL sub-frames or special sub-frames are distributed in a preset period. For instance, the DL sub-frames or special sub-frames may be distributed in a period of 40ms. The specific distribution method may be indicated by a bitmap configured with high-layer signaling. The bitmap may include 40 bit information and equal to a sub-frame configuration period. The value of each bit of the bitmap may correspond to the UL or DL direction of the corresponding sub-frame. For instance, bit "0" may indicate the DL sub-frame or special sub-frame ("0" in front of conversion points of "0" and "1" in the bitmap may indicate that the sub-frame is the special sub-frame, the same below) and bit "1" may indicate the UL sub-frame. In another example, taking 8ms as the distribution period, the specific distribution method may be indicated by the bitmap configured with the high-layer signaling. The bitmap may include 8 bit information and equal to the sub-frame configuration period. The value of each bit of the bitmap may correspond to the UL or DL direction of the corresponding sub-frame. For instance, bit "0" may indicate the DL sub-frame or special sub-frame ("0" in front of the conversion points of "0" and "1" in the bitmap may indicate that the sub-frame is the special sub-frame, the same below) and bit "1" may indicate the UL sub-frame.

If the UL and DL distribution of the FD-UL carrier is one of the current seven TDD UL and DL configurations, a method for determining HARQ-ACK timing may include that the HARQ-ACK timing of the DL sub-frames in the FD-UL may follow the TDD UL and DL configuration A and may be transmitted in the UL sub-frame of the FD-UL.

As for the DL sub-frame m in the FD-DL, if the sub-frame m in the FD-UL is the DL sub-frame or special sub-frame, the DL sub-frame m in the FD-DL may follow the HARQ-ACK timing of the TDD UL and DL configuration A. That is, the UE may receive the data of the PDSCH or control data of the PDCCH or EPDCCH indicating DL SPS release in a sub-frame (n-k) of the UL carrier, i.e., FD-DL and feed back the HARQ-ACK of the PDSCH in a UL sub-frame n of the UL carrier, i.e. FD-UL. The values of k may be figures without parentheses, shown in table 3. The sub-frames in the bundle window are sorted from the front to the back according to sequence number of the sub-frames. The configuration number in the table may refer to the sequence number of the TDD UL and DL configurations of the FD-UL.

As for the DL sub-frame m in the FD-DL, when the HARQ-ACK timing of the DL sub-frames in the FD-UL follow the TDD UL and DL configurations 1 to 5, if the sub-frame m in the FD-UL is the UL sub-frame and the HARQ-ACK timing of the DL sub-frame m in the FD-DL follows the HARQ-ACK timing of the first DL sub-frame behind the sub-frame m in the FD-UL, the UE may receive the data of the PDSCH and the control data of the PDCCH or EPDCCH indicating the DL SPS release in the sub-frame (n-k) of the DL carrier, i.e. FD-DL and feed back the HARQ-ACK of the PDSCH in the UL sub-frame n of the UL carrier, i.e. the FD-UL. The values of k may be figures in parentheses, shown in table 3. The configuration number may refer to the sequence number of the TDD UL and DL configuration of the FD-DL and the sub-frames in the bundle window are sorted from the front to the back according to sequence number of the sub-frames. As shown in table 4, other sub-frames in the bundle window may be sorted from the front to the back according to the sequence number of the sub-frames except for the special sub-frames and special sub-frames may come last. Meaning of figures without the parentheses and figures in the parentheses in table 4 may be the same as those in table 3. The configuration number in the table may be the sequence number of the TDD UL and DL configuration of the FD-UL.

As for the DL sub-frame m in the FD-DL, when the HARQ-ACK timing of the DL sub-frames in the FD-UL follows the TDD UL and DL configurations 0 and 6, if the sub-frame m in the FD-UL is the UL sub-frame, the HARQ-ACK timing of the DL sub-frame m in the FD-DL may follow a principle of uniform distribution and the DL sub-frames in the FD-DL may be transmitted in different UL sub-frames. That is, the UE may receive the data of the PDSCH and the control data of the PDCCH or EPDCCH indicating the DL SPS release in the sub-frame (n-k) of the DL carrier, i.e., FD-DL and feed back the HARQ-ACK of the PDSCH in the UL sub-frame n of the UL carrier, i.e., FD-UL. The values of the k may be the figures in the parentheses shown in tables 3 and 4. The configuration number in the table may be the sequence number of the TDD UL and DL configuration of the FD-UL.

### Table 3

**[Table 3]**

| Configuration number | Sub-frame sequence number*n* | | | | | | | | | |
|---|---|---|---|---|---|---|---|---|---|---|
| | 0 | 1 | 2 | 3 | 4 | 5 | 6 | 7 | 8 | 9 |
| 0 | - | - | 6, [5] | [5],[4] | 4 | - | - | 6,[5] | [5],[4] | 4 |
| 1 | - | - | 7,6 | [6],[5],4 | - | - | - | 7,6 | [6],[5],4 | - |
| 2 | - | - | 8, 7,6,[5], 4 | - | - | - | - | 8, 7, 6, [5],4, | - | - |
| 3 | - | - | 11,[10],[9],[8],7, 6 | 6,5 | 5,4 | - | - | - | - | - |
| 4 | - | - | 12,11,[10],[9], 8, 7 | 7,6,5,4 | - | - | - | - | - | - |
| 5 | - | - | 13, 12, 11,[10],9, 8, 7, 6,5,4, | - | - | - | - | - | - | - |
| 6 | - | - | [8],7 | 7,[6] | [6],5 | - | - | 7 | 7,[6],[5] | - |

Table 3 Index K: {k₀,k₁,...k_{M-1}} of a DL associate set of the TDD system

### Table 4

**[Table 4]**

| Configuration number | Sub-frame sequence number *n* | | | | | | | | | |
|---|---|---|---|---|---|---|---|---|---|---|
| | 0 | 1 | 2 | 3 | 4 | 5 | 6 | 7 | 8 | 9 |
| 0 | - | - | 6, [5] | [5],[4] | 4 | - | - | 6,[5] | [5],[4] | 4 |
| 1 | - | - | 7,6 | [6],[5],4 | - | - | - | 7,6 | [6],[5],4 | - |
| 2 | - | - | 8, 7,[5], 4, 6 | - | - | - | - | 8, 7, [5],4, 6 | - | - |
| 3 | - | - | [10],[9],[8],7, 6, 11 | 6, 5 | 5,4 | - | - | - | - | - |
| 4 | - | - | 12,[10],[9], 8, 7, 11 | 6, 5, 4, 7 | - | - | - | - | - | - |
| 5 | - | - | 13, 12, [10],9, 8, 7, 5, 4, 11, 6 | - | - | - | - | - | - | - |
| 6 | - | - | [8],7 | 7,[6] | [6],5 | - | - | 7 | 7,[6],[5] | - |

Table 4 Index K: {k₀,k₁,...k_{M-1}} of a DL associate set of the TDD system

For instance, it may be assumed that the UE may receive the configuration information of the eNB, the UE may be in a FD mode, the UL and DL sub-frames in the FD-UL may follow a TDD UL and DL configuration 1 and the HARQ-ACK timing of the DL sub-frames in the FD-UL may follow the HARQ-ACK timing of the TDD UL and DL configuration 1. The sub-frames 0 and 1 in the FD-UL may be the DL sub-frames and the HARQ-ACK of the DL sub-frames 0 and 1 in the FD-DL may be transmitted in the UL sub-frame 7. The sub-frame 4 in the FD-UL may be the DL sub-frame and the HARQ-ACK of the DL sub-frame 4 in the FD-DL may be transmitted in the UL sub-frame 8. The sub-frames 5 and 6 in the FD-UL may be the DL sub-frames and the HARQ-ACK of the DL sub-frames 5 and 6 in the FD-DL may be transmitted in the UL sub-frame 2. The sub-frame 9 in the FD-UL may be the DL sub-frame and the HARQ-ACK of the DL sub-frame 9 in the FD-DL may be transmitted in the UL sub-frame 3. The sub-frames 2 and 3 in the FD-UL may be the UL sub-frames and the HARQ-ACK timing of the DL sub-frames 2 and 3 in the FD-DL may follow the HARQ-ACK timing of the sub-frame 4 in the FD-UL. That is, as shown in figure 4, the DL sub-frames 2 and 3 in the FD-DL may be transmitted in the UL sub-frame 8, the sub-frames 7 and 8 in the FD-UL may be the UL sub-frames, the HARQ-ACK timing of the DL sub-frames 7 and 8 in the FD-DL may follow the HARQ-ACK timing of the sub-frame 9 in the FD-UL and the DL sub-frames 7 and 8 in the FD-DL may be transmitted in the UL sub-frame 3.

When the number of the UL sub-frames in the FD-UL is 7, 8, 9 or 10, there may be following modes for determining the HARQ-ACK timing.

### Mode one:

When the number of the UL sub-frames is 7, 8 or 9, the HARQ-ACK timing of the DL sub-frames in the FD-UL may follow the TDD UL and DL configuration A, A=0, 1, 2, 3, 4, 5 or 6. For instance, it may be determined by the high-layer signaling configuration or protocol that the DL sub-frames in the FD-UL may follow the HARQ-ACK timing of the TDD UL and DL configuration 0.

As for the HARQ-ACK timing of the DL sub-frames in the FD-DL, the HARQ-ACK timing of the TDD UL and DL configuration may be obtained by searching for tables 3 and 4 according to the TDD UL and DL configuration A. That is, the UE may receive the data of the PDSCH and control data of the PDCCH or EPDCCH indicating the DL SPS release in the sub-frame (n-k) of the DL carrier and feed back the HARQ-ACK of the PDSCH in the UL sub-frame n of the UL carrier. The values of the k may be the figures in the parentheses shown in tables 3 and 4. The configuration number in the table may be the sequence number of the TDD UL and DL configuration of the HARQ-ACK timing followed by the FD-UL.

### Mode two:

When the number of the UL sub-frames is 7, 8 or 9, the HARQ-ACK timing of the DL sub-frames in the FD-UL may follow the TDD UL and DL configuration A, A=0, 1, 2, 3, 4, 5 or 6. For instance, it may be determined by the high-layer signaling configuration or protocol that the DL sub-frames in the FD-UL may follow the HARQ-ACK timing of the TDD UL and DL configuration 0.

If the sub-frame n in the FD-UL is the UL sub-frame, the HARQ-ACK of the DL sub-frame (n-4) in the FD-DL may be transmitted in the sub-frame n in the FD-UL. If the sub-frame n in the FD-UL is the DL sub-frame or the special sub-frame, the HARQ-ACK of the DL sub-frame (n-4) in the FD-DL may be transmitted in the UL sub-frame (n+x) in the FD-UL, x>1. The UL sub-frame (n+x) may be the first UL sub-frame behind the sub-frame n. When the distribution of the UL and DL sub-frames in the FD-UL is shown in table 5, the UE may receive the data of the PDSCH and control data of the PDCCH or EPDCCH indicating the DL SPS release in the sub-frame (n-k) of the DL carrier, i.e., FD-DL and feed back the HARQ-ACK of the PDSCH in the UL sub-frame n of the UL carrier, i.e. FD-UL. The values of k may be shown in table 6.

In another example, the HARQ-ACK information of the DL sub-frames in the FD-DL may be equally transmitted in the FD-UL. The UE may receive the data of the PDSCH and control data of the PDCCH or EPDCCH indicating the DL SPS release in the sub-frame (n-k) of the DL carrier, i.e. FD-UL and feed back the HARQ-ACK of the PDSCH in the UL sub-frame n of the UL carrier, i.e. FD-UL. The values of k may be shown in table 7.

### Table 5

**[Table 5]**

| Number of UL sub-frames | DL-UL conversion point period | Sequence number of sub-frames in a UL and DL conversion period | | | | | | | | | |
|---|---|---|---|---|---|---|---|---|---|---|---|
| | | 0 | 1 | 2 | 3 | 4 | 5 | 6 | 7 | 8 | 9 |
| 7 | 10 ms | S | U | U | U | U | D | S | U | U | U |
| 7 | 10 ms | D | D | S | U | U | U | U | U | U | U |
| 8 | 10 ms | S | U | U | U | U | S | U | U | U | U |
| 8 | 10 ms | D | S | U | U | U | U | U | U | U | U |
| 9 | 10 ms | S | U | U | U | U | U | U | U | U | U |

### Table 6

**[Table 6]**

| Number of UL sub-frames | Sub-frame sequence numbern | | | | | | | | | |
|---|---|---|---|---|---|---|---|---|---|---|
| | 0 | 1 | 2 | 3 | 4 | 5 | 6 | 7 | 8 | 9 |
| 7 | - | 5 , 4 | 4 | 4 | 4 | - | - | 6,5 ,4 | 4 | 4 |
| 7 | - | - | - | 7,6,5,4 | 4 | 4 | 4 | 4 | 4 | 4 |
| 8 | | 5 , 4 | 4 | 4 | 4 | - | 5,4 | 4 | 4 | 4 |
| 8 | | 6,5 ,4 | 4 | 4 | 4 | 4 | 4 | 4 | 4 | 4 |
| 9 | 5,4 | 4 | 4 | 4 | 4 | 4 | 4 | 4 | 4 | 4 |

### Table 7

**[Table 7]**

| Number of UL sub-frames | Sub-frame sequence numbern | | | | | | | | | |
|---|---|---|---|---|---|---|---|---|---|---|
| | 0 | 1 | 2 | 3 | 4 | 5 | 6 | 7 | 8 | 9 |
| 7 | - | 5 ,4 | 4 | 4 | 4 | - | - | 6,5 | 5,4 | 4 |
| 7 | - | - | - | 7,6, | 6 ,5 | 5 ,4 | 4 | 4 | 4 | 4 |
| 8 | | 5 ,4 | 4 | 4 | 4 | - | 5,4 | 4 | 4 | 4 |
| 8 | | 6,5 | 5,4 | 4 | 4 | 4 | 4 | 4 | 4 | 4 |
| 9 | 5,4 | 4 | 4 | 4 | 4 | 4 | 4 | 4 | 4 | 4 |

### Mode three:

When the number of the UL sub-frames is 7, 8 or 9 and the sub-frame n in the FD-UL is the UL sub-frame, the HARQ-ACK of the DL sub-frame (n-4) or special sub-frame (n-4) in the FD-UL may be transmitted in the sub-frame n in the FD-UL. If the sub-frame n in the FD-UL is the DL sub-frame or special sub-frame, the HARQ-ACK of the DL sub-frame (n-4) or special sub-frame (n-4) in the FD-UL may be transmitted in the UL sub-frame (n+x) in the FD-UL, x>1. The sub-frame (n+x) may be the first UL sub-frame behind the sub-frame n in the FD-UL. When the distribution of the UL and DL sub-frames in the FD-UL is shown in table 5, the UE may receive the data of the PDSCH and control data of the PDCCH or EPDCCH indicating the DL SPS release in the sub-frame (n-k) of the UL carrier, i.e. FD-UL and feed back the HARQ-ACK of the PDSCH in the UL sub-frame n of the UL carrier, i.e. FD-UL. The values of k may be shown in table 8.

If the sub-frame n in the FD-UL is the UL sub-frame, the HARQ-ACK of the DL sub-frame (n-4) in the FD-DL may be transmitted in the sub-frame n in the FD-UL. If the sub-frame n in the FD-UL is the DL sub-frame or the special sub-frame, the HARQ-ACK of the DL sub-frame (n-4) in the FD-DL may be transmitted in the UL sub-frame (n+x) in the FD-UL, x>1. The sub-frame (n+x) may be the first UL sub-frame behind the sub-frame n in the FD-UL. When the distribution of the UL and DL sub-frames in the FD-UL is shown in table 5, the UE may receive the data of the PDSCH and control data of the PDCCH or EPDCCH indicating the DL SPS release in the sub-frame (n-k) of the DL carrier, i.e. FD-DL and feed back the HARQ-ACK of the PDSCH in the UL sub-frame n of the UL carrier, i.e. FD-UL. The values of k may be shown in table 6.

In another example, the HARQ-ACK information of the DL sub-frames in the FD-DL may be equally transmitted in the FD-UL. The UE may receive the data of the PDSCH and control data of the PDCCH or EPDCCH indicating the DL SPS release in the sub-frame (n-k) of the DL carrier, i.e. FD-UL and feed back the HARQ-ACK of the PDSCH in the UL sub-frame n of the UL carrier, i.e. FD-UL. The values of k may be shown in table 7.

### Table 8

**[Table 8]**

| Number of UL sub-frames | Sub-frame sequence numbern | | | | | | | | | |
|---|---|---|---|---|---|---|---|---|---|---|
| | 0 | 1 | 2 | 3 | 4 | 5 | 6 | 7 | 8 | 9 |
| 7 | - | 5 | | 4 | | | | | | 4 |
| 7 | - | - | - | | 4 | 4 | 4 | | | |
| 8 | | | | | 4 | | | | | 4 |
| 8 | | | | | 4 | 4 | | | | |
| 9 | | | | | 4 | | | | | |

When the number of the UL sub-frames is 10, the HARQ-ACK timing of the FD-DL may follow an FDD HARQ-ACK timing.

When the DL sub-frames or special sub-frames in the FD-DL carrier and the UL sub-frames in the FD-UL carrier may be distributed according to a specific period of Tms, for instance, when the DL sub-frames are distributed in the period of T=40 ms, the method for determining the HARQ-ACK timing may be as follows.

If the sub-frame n in the FD-UL is the UL sub-frame and the sub-frame (n-4) in the FD-UL is the DL sub-frame or special sub-frame, the HARQ-ACK timing of the DL sub-frame (n-4) or special sub-frame (n-4) in the FD-UL may follow the FDD HARQ-ACK timing. If the sub-frame (n-4) in the FD-UL is the DL sub-frame or special sub-frame, the sub-frame n in the FD-UL may be the DL sub-frame or special sub-frame. The HARQ-ACK of the DL sub-frame (n-4) or the special sub-frame (n-4) in the FD-UL may be transmitted in the UL sub-frame (n+x) in the FD-UL, x>1. The sub-frame (n+x) may be the first UL sub-frame behind the sub-frame n in the FD-UL.

As for the DL sub-frame m in the FD-UL, if the sub-frame m in the FD-UL is the DL sub-frame or special sub-frame, the HARQ-ACK timing of the DL sub-frame m in the FD-UL may follow the HARQ-ACK timing of the DL sub-frame m or special sub-frame m in the FD-UL. As shown in figure 5, if the sub-frame m in the FD-UL is the UL sub-frame, the HARQ-ACK timing of the DL sub-frame m in the FD-DL may follow the HARQ-ACK timing of the first DL sub-frame behind the sub-frame m in the FD-UL. In another example, if the sub-frame n in the FD-UL is the UL sub-frame and the sub-frame (n-4) in the FD-UL is the DL sub-frame, the HARQ-ACK information of the DL sub-frame (n-4) in the FD-DL may be transmitted in the sub-frame n in the FD-UL. If the sub-frame (n-4) in the FD-DL is the DL sub-frame, the sub-frame n in the FD-UL is the DL sub-frame or special sub-frame, the HARQ-ACK of the DL sub-frame (n-4) in the FD-DL may be transmitted in the UL sub-frame (n+x) in the FD-UL, x >1. As shown in figure 6, the sub-frame (n+x) may be the first UL sub-frame behind the sub-frame n in the FD-UL.

In another example, the PDSCH HARQ timing may be defined as the period of 10 ms. It may be ensured that the position for feeding back the HARQ-ACK in each 10ms frame may be fixed as the UL sub-frame according to a sub-frame pattern in the FD-UL configured in the period of T=40ms. The TDD UL and DL configuration may be determined according to the position of the sub-frame fixed as the UL sub-frame in the 10ms frame. The PDSCH HARQ timing of the DL sub-frames in the FD-UL may be obtained taking the TDD UL and DL configuration as a DL reference UL and DL configuration. The PDSCH HARQ timing of each DL sub-frame in the FD-DL may be obtained according to the TDD UL and DL configuration and tables 3, 4 and 6.

### Embodiment two:

In this embodiment, the UL or DL direction of some sub-frames in the FD-UL carrier may be changed. The sub-frames of the FD-UL carrier may be changed to DL sub-frames or special sub-frames, while all sub-frames in the FD-DL may be configured as the DL sub-frames.

PDSCH scheduling and transmission and a soft buffer may have following processing modes.

Mode one: as for a same UE, DL sub-frames in the FD-DL and DL sub-frames or special sub-frames in the FD-UL may be simultaneously used.

The PDSCH scheduling of the FD-DL and FD-UL may have following methods.

### Method one:

One PDSCH scheduling method may be that the DL of the FD-DL and the DL of the FD-UL may be taken as two cells for processing. A DL sub-frame in the FD-DL may be scheduled by another DL sub-frame in the FD-DL. A DL sub-frame or special sub-frame in the FD-UL may be cross-carrier scheduled by the DL sub-frame in the FD-DL. For instance, a DL sub-frame n or special sub-frame n in the FD-UL may be scheduled by a DL sub-frame n in the FD-DL. Blind detection of the scheduling of the DL sub-frames in the FD-DL may be performed for all DL sub-frames in the FD-DL. Blind detection of the cross-carrier scheduling of the DL sub-frames or special sub-frames in the FD-DL may be performed when the FD-UL are the DL sub-frames and the FD-UL are the DL sub-frames or special sub-frames. The scheduling of the UL sub-frames in the FD-UL and the scheduling of the DL sub-frames in the FD-DL may be the scheduling of the same cell. The scheduling of the UL sub-frames in the FD-UL and the scheduling of the DL sub-frames in the FD-DL may use a same carrier indicator field (CIF). In a same (E)PDCCH searching space, if number of bits for scheduling (E)PDCCH format 0 of a UL sub-frame in the FD-UL is different from number of bits for scheduling (E)PDCCH format 1A of a DL sub-frame in the FD-DL, number 0 may be added to make the number of the bits for scheduling the (E)PDCCH format 0 of the UL sub-frame in the FD-UL equal to the number of the bits for scheduling the (E)PDCCH format 1A of the DL sub-frame in the FD-DL. The scheduling of the UL sub-frame in the FD-UL and the scheduling of the DL sub-frame in the FD-UL may not be the scheduling of the same cell. That is, in the same (E)PDCCH searching space, if the number of the bits for scheduling the (E)PDCCH format 0 of the UL sub-frame in the FD-UL is different from the number of the bits for scheduling the (E)PDCCH format 1A of the DL sub-frame in the FD-DL, number 0 may not be needed to be added to make the number of the bits for scheduling the (E)PDCCH format 0 of the UL sub-frame in the FD-UL equal to the number of the bits for scheduling the (E)PDCCH format 1A of the DL sub-frame in the FD-DL. The UE may only perform the blind detection for the (E)PDCCH transmitted in the DL sub-frame in the FD-DL to receive the PDSCH of the DL sub-frames in the FD-UL and FD-DL. Since the DL sub-frame in the FD-DL schedules the DL sub-frame in the FD-DL and schedules the DL sub-frame or special sub-frame in the FD-UL, the scheduling may need to be distinguished. One distinguishing method may be indicating the scheduling with information in the CIF. That is, The FD-DL and FD-UL of the FD cell may be taken as two member cells for processing and different CIFs may be allocated to the FD-DL and FD-UL. If the FD cell corresponds to the Pcell of the UE, the FD-DL may still correspond to CIF=0, while other CIF values may be allocated to the FD-UL.

### Method two:

Another PDSCH scheduling method may be that the DL of the FD-DL and the DL of the FD-UL may be taken as two cells for processing. A DL sub-frame in the FD-DL may be scheduled by another DL sub-frame in the FD-DL. A DL sub-frame or special sub-frame in the FD-UL may be scheduled by another DL sub-frame or special sub-frame in the FD-UL. Blind detection of the scheduling of the DL sub-frameor special sub-frame in the FD-UL may be performed for the DL sub-frame or special sub-frame in the FD-UL. Blind detection of the (E)PDCCH transmitted in the DL sub-frame in the FD-DL may be performed by the UE. Furthermore, blind detection of the (E)PDCCH transmitted in the DL sub-frame or special sub-frame in the FD-UL may be performed by the UE. The UL sub-frame in the FD-UL may be scheduled by the FD-DL and the scheduling of the UL sub-frames in the FD-UL and the scheduling of the DL sub-frames in the FD-DL may be the scheduling of the same cell. In a same (E)PDCCH searching space, if number of bits for scheduling (E)PDCCH format 0 of a UL sub-frame in the FD-UL is different from number of bits for scheduling (E)PDCCH format 1A of DL sub-frame in the FD-DL, number 0 may be added to make the number of the bits for scheduling the (E)PDCCH format 0 of the UL sub-frame in the FD-UL equal to the number of the bits for scheduling the (E)PDCCH format 1A of the DL sub-frame in the FD-DL. The scheduling of the UL sub-frame in the FD-UL and the scheduling of the DL sub-frame in the FD-UL may not be the scheduling of the same cell. That is, in the same (E)PDCCH searching space, if the number of the bits for scheduling the (E)PDCCH format 0 of the UL sub-frame in the FD-UL is different from the number of the bits for scheduling the (E)PDCCH format 1A of the DL sub-frame in the FD-DL, number 0 may not be needed to be added to make the number of the bits for scheduling the (E)PDCCH format 0 of the UL sub-frame in the FD-UL equal to the number of the bits for scheduling the (E)PDCCH format 1A of the DL sub-frame in the FD-DL.

### Method three:

When DL sub-frames of the FD-DL and FD-UL are cross-carrier scheduled by another cell, the FD-DL and the FD-UL may be taken as two cells for processing. That is, different CIF values may be allocated to the FD-DL and FD-UL. One CIF value may represent that the sub-frame in the FD-DL may be scheduled. A different CIF value may represent that the sub-frame in the FD-UL may be scheduled. The scheduling of the UL sub-frames in the FD-UL and the scheduling of the DL sub-frames in the FD-DL may be the scheduling of the same cell. The scheduling of the UL sub-frames in the FD-UL and the scheduling of the DL sub-frames in the FD-DL may use a same carrier indicator field (CIF). In a same (E)PDCCH searching space, if number of bits for scheduling (E)PDCCH format 0 of a UL sub-frame in the FD-UL is different from number of bits for scheduling (E)PDCCH format 1A of DL sub-frame in the FD-DL, number 0 may be added to make the number of the bits for scheduling the (E)PDCCH format 0 of the UL sub-frame in the FD-UL equal to the number of the bits for scheduling the (E)PDCCH format 1A of the DL sub-frame in the FD-DL. The scheduling of the UL sub-frame in the FD-UL and the scheduling of the DL sub-frame in the FD-UL may not be the scheduling of the same cell. That is, in the same (E)PDCCH searching space, if the number of the bits for scheduling the (E)PDCCH format 0 of the UL sub-frame in the FD-UL is different from the number of the bits for scheduling the (E)PDCCH format 1A of the DL sub-frame in the FD-DL, number 0 may not be needed to be added to make the number of the bits for scheduling the (E)PDCCH format 0 of the UL sub-frame in the FD-UL equal to the number of the bits for scheduling the (E)PDCCH format 1A of the DL sub-frame in the FD-DL.

### Method four:

When DL sub-frames of the FD-DL and FD-UL are cross-carrier scheduled by another cell, the DL of the FD-DL and the DL of the FD-UL may be taken as two cells for processing. That is, different CIF values may be allocated to the DL of the FD-DL and the DL of the FD-UL. One CIF value may represent that the sub-frame in the FD-DL may be scheduled. A different CIF value may represent that the DL sub-frame or the special sub-frame in the FD-UL may be scheduled. The UL sub-frames in the FD-UL and the DL sub-frames in the FD-DL may be cross-carrier scheduled by a cell. The scheduling of the UL sub-frames in the FD-UL and the scheduling of the DL sub-frames in the FD-DL may be the scheduling of the same cell. The scheduling of the UL sub-frames in the FD-UL and the scheduling of the DL sub-frames in the FD-DL may use a same carrier indicator field (CIF). In a same (E)PDCCH searching space, if number of bits for scheduling (E)PDCCH format 0 of a UL sub-frame in the FD-UL is different from number of bits for scheduling (E)PDCCH format 1A of DL sub-frame in the FD-DL, number 0 may be added to make the number of the bits for scheduling the (E)PDCCH format 0 of the UL sub-frame in the FD-UL equal to the number of the bits for scheduling the (E)PDCCH format 1A of the DL sub-frame in the FD-DL. The scheduling of the UL sub-frame in the FD-UL and the scheduling of the DL sub-frame in the FD-UL may not be the scheduling of the same cell. That is, in the same (E)PDCCH searching space, if the number of the bits for scheduling the (E)PDCCH format 0 of the UL sub-frame in the FD-UL is different from the number of the bits for scheduling the (E)PDCCH format 1A of the DL sub-frame in the FD-DL, number 0 may not be needed to be added to make the number of the bits for scheduling the (E)PDCCH format 0 of the UL sub-frame in the FD-UL equal to the number of the bits for scheduling the (E)PDCCH format 1A of the DL sub-frame in the FD-DL. The DL sub-frame in the FD-UL may be cross-carrier scheduled by another cell or the DL sub-frame in the FD-UL may be self-scheduled.

### Method five:

A PDSCH scheduling method may be that the FD-DL and FD-UL may be taken as one cell for processing. One bit may be added to DL assignment. One bit may be reserved or bits in the conventional domain in the DL assignment may be re-explained to indicate whether PDSCH scheduled by the current DL assignment is the PDSCH in the FD-DL or the PDSCH in the FD-UL.

The processing of the soft buffer of the UE may include: taking the FD-UL and FD-DL as cells in different configurations in the CA. HARQ process number of each cell may be independently determined and may be respectively determined according to a DL HARQ-ACK timing of each cell or a reference DL HARQ-ACK timing. In another example, the FD-UL and FD-DL may be taken as a same virtual cell for processing. The maximum HARQ process number of the virtual cell may be determined according to the HARQ_ACK timing.

Method two: as for the same UE, at the same moment, DL reception only may be performed in one of the FD-DL and FD-UL.

A DL sub-frame in the FD-DL may be scheduled by another DL sub-frame in the FD-DL and a DL sub-frame in the FD-UL may be scheduled by another DL sub-frame in the FD-UL. At the same moment, blind detection of the (E)PDCCH transmitted in only one DL sub-frame in the FD-DL and FD-UL may be performed by the UE. The blind detection of the scheduling of the DL sub-frame in the FD-UL may only be performed for the DL sub-frame in the FD-UL. In each sub-frame, whether the blind detection is performed by the UE for the (E)PDCCH transmitted in the DL sub-frame in the FD-DL or on the (E)PDCCH transmitted in the DL sub-frame in the FD-UL is determined via indication information received by the UE from the eNB, for instance, may be indicated ina bitmap mode via the high-layer signaling. A specific indication mode may be indicating via a bitmap configured utilizing the high-layer signaling. The bitmap may include L bit information and equal to a sub-frame configuration period. The value of each bit of the bitmap may indicate whether the sub-frame belongs to the FD-DL or the FD-UL. Bit "0" may indicate that the sub-frame may belong to the FD-DL and bit "1" may indicate that the sub-frame may belong to the FD-UL. In another example, the FD-UL may be indicated by one bitmap and the FD-UL may be indicated by another bitmap. Each bitmap may include L bit information and equal to a sub-frame configuration period. The value of each bit of the bitmap may indicate whether the sub-frame may be scheduled or may not be scheduled. Bit "0" may indicate that the sub-frame can be scheduled, while bit "1" may indicate that the sub-frame cannot be scheduled. In another example, if all sub-frames of the FD-DL and FD-UL are the DL sub-frames or special sub-frames, one bit information may indicate whether the UE detects the DL sub-frames in the FD-DL or detects the DL sub-frames or special sub-frames in the FD-UL.

When the FD-DL and FD-UL are cross-carrier scheduled by another cell, the FD-DL and FD-UL may be taken as one cell for processing. As for the (E) PDCCH received by each sub-frame, the scheduled PDSCH may indicate whether the FD-DL or FD-UL may be scheduled in this sub-frame via the high-layer signaling. The scheduled PDSCH may indicate via the high-layer signaling in a bitmap mode. A specific indication mode may be indicating via a bitmap configured utilizing the high-layer signaling. The bitmap may include L bit information and equal to a sub-frame configuration period. The value of each bit of the bitmap may indicate whether the sub-frame belongs to the FD-DL or the FD-UL. Bit "0" may indicate that the sub-frame may belong to the FD-DL and bit "1" may indicate that the sub-frame may belong to the FD-UL. In another example, the FD-UL may be indicated by one bitmap and the FD-UL may be indicated by another bitmap. Each bitmap may include L bit information and equal to a sub-frame configuration period. The value of each bit of the bitmap may indicate whether the sub-frame may be scheduled or may not be scheduled. Bit "0" may indicate that the sub-frame can be scheduled, while bit "1" may indicate that the sub-frame cannot be scheduled. In another example, if all sub-frames of the FD-DL and FD-UL are the DL sub-frames, one bit information may indicate whether the UE detects the DL sub-frames in the FD-DL or detects the DL sub-frames or special sub-frames in the FD-UL.

For instance, it may be assumed that the FD-DL and FD-UL may adopt the same HARQ timing of the PDSCH and DL sub-frames in the FD-UL may be a sub-set of DL sub-frames in the FD-DL. Therefore, total HARQ process number transmitted on the PDSCH of two carriers may be determined according to all DL sub-frames of the FD-DL. In another example, the total HARQ process number transmitted by the UE on the PDSCH of the two carriers may be determined according to a configured set of sub-frames, which may transmit DL data, in the FD-DL and FD-UL.

The HARQ-ACK mapping may be processed according one cell. The sorting may be performed according to sequence of sub-frames in the FD-DL and FD-UL. In another example, the HARQ-ACK mapping may be processed according to two cells. Sub-frames in the FD-DL may be sorted first and sub-frames in the FD-UL may be sorted then.

The processing of the soft buffer of the UE may include: taking the FD-UL and FD-DL as a same virtual cell for processing. The maximum HARQ process number of the virtual cell may be determined according to the HARQ-ACK timing of all DL sub-frames of the FD-DL. In another example, the total HARQ process number transmitted by the UE on the PDSCH of the two carriers may be determined according to a configured union set of sub-frames, which may transmit the DL data, in the FD-DL and FD-UL.

Method three: as for a same UE, the UE may keep monitoring control information, such as system information and paging information on the FD-DL and receive DL data except for the control information on one carrier in the FD-DL or FD-UL. If the FD cell is a Scell of the UE, the control information such as the system information and the paging information may not need to be monitored in the FD cell. Then, the UE may receive the DL data on one of the FD-DL or FD-UL.

Whether the UE transmits the data of the PDSCH and control data of the PDCCH or EPDCCH indicating the DL SPS release in a DL sub-frame in the FD-DL or whether the UE transmits the data of the PDSCH or the control data of the PDCCH or EPDCCH indicating the DL SPS release in a DL sub-frame in the FD-UL may be determined according to the high-layer signaling received by the UE from the eNB.

If the UE only transmits the data in the FD-DL, the DL sub-frame in the FD-DL may be scheduled by the DL sub-frame in the FD-DL. Blind detection of the (E)PDCCH transmitted in the DL sub-frame in the FD-DL may be performed by the UE. If the UE only transmits the data in the FD-UL, the blind detection of the (E)PDCCH of an exclusive searching space of the UE may be performed by the UE in the corresponding DL sub-frame in the FD-DL. In another example, the blind detection of the (E)PDCCH of the exclusive searching space of the UE may be performed by the UE in the corresponding DL sub-frame of the FD-UL. The blind detection of the scheduling of the DL sub-frame in the FD-UL may only be performed for the DL sub-frame in the FD-UL. At the same time, the blind detection may be performed by the UE for the PDCCH of a cell public searching space transmitted in the DL sub-frame in the FD-DL to obtain the system information and paging information, etc.

If the FDD is the Scell and the UE only transmits the data in the FD-DL, the DL sub-frame in the FD-DL may only be scheduled by the DL sub-frame in the FD-DL. The blind detection of the (E)PDCCH transmitted in the DL sub-frame in the FD-DL may be performed by the UE. If the UE only transmits the user data in the FD-UL, the blind detection of the (E)PDCCH of the exclusive searching space of the UE may be performed by the UE in the corresponding DL sub-frame of the FD-DL. In another example, the blind detection of the (E)PDCCH of the exclusive searching space of the UE may be performed by the UE in the corresponding DL sub-frame or special sub-frame in the FD-UL. When the FD-DL or FD-UL is cross-carrier scheduled by another cell, the FDD cell may be taken as a same cell for processing. If the UE only transmits the data in the FD-DL, the sub-frame in the FD-DL may be cross-carrier scheduled. If the UE only transmits the data in the FD-UL, the DL sub-frame or special sub-frame in the FD-UL may be cross-carrier scheduled.

The processing of the soft buffer of the UE may be that if the UE only transmits the data in the FD-DL, the maximum HARQ process number may be determined according to the HARQ-ACK timing of the PDSCH of the FD-DL. If the UE only transmits the data in the DL sub-frame or special sub-frame in the FD-UL, the maximum HARQ process number may be determined according to the HARQ-ACK timing of the PDSCH of the FD-UL.

### Embodiment three:

In this embodiment, the UL or DL direction of some sub-frames in the FD-UL carrier may be changed. The sub-frames of the FD-UL carrier may be changed to DL sub-frames or special sub-frames, while all sub-frames in the FD-DL may be configured as the DL sub-frames.

The UE may obtain sub-frame configuration information of the FD-UL carrier via receiving dynamic indication information of the eNB. The sub-frame configuration information may include: position of sub-frames, the duplex direction of which may be changed, on the FD-DL carrier. One possible mode may be that the eNB may dynami-callyindicate sub-frame configuration information of the FD-UL carrier via the signaling borne by the (E)PDCCH. The (E)PDCCH may be transmitted in any sub-frame in the FD-DL. In another example, the (E)PDCCH not only may be transmitted in any sub-frame in the FD-DL, but also may be transmitted in the fixed DL sub-frame or special sub-frame in the FD-UL. For instance, if the sub-frame configuration of the FD-UL may be conversed in the current seven kinds of TDD UL and DL configurations, sub-frames 0, 1, 5 and 6 may be fixed DL sub-frames or special sub-frames.

In a situation that the sub-frame configuration information of the FD-UL carrier is a dynamic indication, a DL HARQ-ACK timing of the FD-DL and FD-UL, a scheduling method of the PDSCH and a processing method of a soft buffer may be the same as those in embodiment one and embodiment two. The TDD UL and DL configuration indicating the FD-UL in the embodiment one and embodiment two may be replaced by a reference TDD UL and DL configuration. The reference TDD UL and DL configuration may be the DL HARQ-ACK timing, which may need to be followed by the FD-UL. The UE may obtain the reference TDD UL and DL configuration via the configuration of the high-layer signaling.

### Embodiment four:

In this embodiment, the duplex direction of some sub-frames of the FD-DL carrier may be changed. The sub-frames of the FD-DL carrier may be changed to UL sub-frames, while all sub-frames of the FD-UL may be configured as the UL sub-frames.

One PDSCH scheduling method may be that the DL sub-frame in the FD-DL may be scheduled by the DL sub-frame in the FD-DL. The blind detection of the scheduling of the DL sub-frame in the FD-DL may only be performed for the DL sub-frame in the FD-DL. Blind detection may only be performed by the UE for the (E)PDCCH transmitted in the DL sub-frame in the FD-DL to receive the PDSCH of the DL sub-frame in the FD-DL.

The HARQ-ACK timing of the DL sub-frame in the FD-DL may follow the FDD timingand may be transmitted in the UL sub-framein the FD-UL.

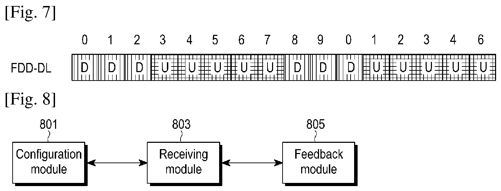

The processing of the soft buffer of the UE may be that the HARQ process number of the cell may be determined according to the FDD HARQ-ACK timing. That is, the HARQ process number is 8. In another example, the number of the UL sub-frames in a process period may be subtracted from the HARQ process number. For instance, as shown in figure 7,if five of the eight sub-frames in a process period are changed to the UL sub-frames, the HARQ process number may be three.

### Embodiment 5:

In accordance with the above method, the present application may disclose a terminal device. As shown in figure 8, this terminal may be used for implementing multiple sub-frames scheduling of the PDSCH.

The terminal device may include:
a configuration module 801 , configured to receive configuration information from an eNB. With the configuration information, the UE may work in a FD mode.

The terminal device may further include a receiving module 803 , configured to receive data of a PDCCH and control data of a PDCCH or EPDCCH indicating DL SPS release according to a scheduling mode of the configured FD mode.

The terminal device may further include a feedback module 805 , configured to feed back HARQ-ACK information according to a corresponding HARQ-ACK timing.

Meanwhile, although the configuration module 801 and the receiving module 803 are illustrated as separated components in FIG. 8, the configuration module 801 and the receiving module 803 may be implemented as one component. Further, the configuration module 801, the receiving module 803 and the feedback module 805 may be implemented as one component.

The foregoing only describes examples of the present disclosure. The protection scope of the present disclosure, however, is not limited to the above description. Any change or substitution, easily occurring to those skilled in the art, should be covered by the protection scope of the independent claims.

## Claims

1. A method for communicating data on physical downlink shared channel, PDSCH, comprising:
receiving (301), by a user equipment, UE, configuration information be used by the UE to work in a flexible duplex, FD, mode;
receiving (302), by the UE, data of a PDSCH and control data of a physical downlink control channel, PDCCH, or enhanced physical downlink control channel, EPDCCH, indicating downlink, DL, semi-persistent scheduling, SPS, release in at least one DL sub-frame according to the FD mode; and
transmitting (303), by the UE, hybrid automatic repeat request-acknowledge, HARQ-ACK, information corresponding to the data of the PDSCH according to a HARQ-ACK timing corresponding to the data of the PDSCH,
wherein, in the FD mode, an uplink, UL, carrier and a DL carrier for frequency division duplexing, FDD, mode are respectively recorded as a FD-UL carrier and a FD-DL carrier respectively, and the configuration information indicates a sub-frame configuration of sub-frames on the FD-UL carrier, wherein
the FD mode comprises that in a frame period, some sub-frames of the FD-UL carrier are DL sub-frames or special sub-frames and all sub-frames of the FD-DL carrier are DL sub-frames; and
wherein the FD-DL carrier is used for performing DL transmission to a FDD UE and the FD-UL carrier is used for performing UL transmission to the FDD UE.

2. The method according to claim 1, wherein
the frame period is 10ms, in the frame period, UL and DL sub-frames in the FD-UL carrier follow one of conventional seven kinds of TDD UL and DL configurations, or
in the frame period, the FD-UL carrier comprises: 7, 8, 9 or 10 UL sub-frames.

3. The method according to claim 2, wherein
when the UL and DL sub-frames in the FD-UL carrier follow a TDD UL and DL configuration A in the convention seven kinds of TDD UL and DL configurations, a HARQ-ACK timing of DL sub-frames in the FD-UL carrier follows the TDD UL and DL configuration A;
wherein the feeding back HARQ-ACK information according to a corresponding HARQ-ACK timing comprises:
transmitting HARQ-ACK information of the DL sub-frames in the FD-UL carrier in corresponding UL sub-frames in the FD-UL carrier.

4. The method according to claim 3, wherein
as for a DL sub-frame m in the FD-DL carrier, if a sub-frame m in the FD-UL carrier is the DL sub-frame or special sub-frame, the DL sub-frame m in the FD-DL carrier follows the HARQ-ACK timing of the TDD UL and DL configuration A and the HARQ-ACK timing comprises: if the UE receives the data of the PDSCH and control data of the PDCCH or EPDCCH indicating the DL SPS release in a sub-frame, n-k, in the FD-DL carrier, the feeding back HARQ-ACK information according to a corresponding HARQ-ACK timing comprises: feeding back the HARQ-ACK information on a UL sub-frame n of the FD-UL carrier; wherein values of k are figures without parentheses as shown in tables 9 and 10; a configuration sequence number in the tables 9 and 10 is a sequence number of a TDD UL and DL configuration of the FD-UL carrier;
as for the DL sub-frame m in the FD-DL carrier, when the HARQ-ACK timing of the DL sub-frames in the FD-UL carrier follows TDD UL and DL configurations 1 to 5, if the sub-frame m in the FD-UL carrier is a UL sub-frame, the HARQ-ACK timing of the DL sub-frame m in the FD-DL carrier follows the HARQ-ACK timing of a first DL sub-frame behind the sub-frame m in the FD-UL carrier, the HARQ-ACK timing comprises: if the UE receives the data of the PDSCH and the control data of the PDCCH or EPDCCH indicating the DL SPS release in the sub-frame, n-k, in the FD-DL carrier, the feeding back HARQ-ACK information according to a corresponding HARQ-ACK timing comprises: feeding back the corresponding HARQ-ACK information in the UL sub-frame n of the FD-UL carrier; wherein the values of k are the figures in the parentheses as shown in tables 9 and 10;
as for the DL sub-frame m in the FD-DL carrier, when the HARQ-ACK timing of the DL sub-frames in the FD-UL carrier follows TDD UL and DL configurations 0 and 6, if the sub-frame m in the FD-DL carrier is the UL sub-frame, the HARQ-ACK timing of the DL sub-frame m in the FD-DL carrier follows a principle of uniform distribution, the DL sub-frames in the FD-DL carrier are
transmitted in different UL sub-frames and the UE receives the data of the PDSCH and the control data of the PDCCH or EPDCCH indicating the DL SPS release in the sub-frame, n-k, of the FD-DL carrier, the feeding back HARQ-ACK information according to a corresponding HARQ-ACK timing comprises: feeding back the HARQ-ACK information in the UL sub-frame n in the FD-UL carrier; wherein the values of k are the values in the parentheses as shown in tables 9 and 10;
**<table 9>**
| Configuration number | Sub-frame sequence number*n* | | | | | | | | | |
|---|---|---|---|---|---|---|---|---|---|---|
| | 0 | 1 | 2 | 3 | 4 | 5 | 6 | 7 | 8 | 9 |
| 0 | - | - | 6, [5] | [5],[4] | 4 | - | - | 6,[5] | [5],[4] | 4 |
| 1 | - | - | 7,6 | [6],[5],4 | - | - | - | 7,6 | [6],[5],4 | - |
| 2 | - | - | 8, 7,6,[5], 4 | - | - | - | - | 8, 7, 6, [5],4, | - | - |
| 3 | - | - | 11,[10],[9],[8],7,6 | 6,5 | 5,4 | - | - | - | - | - |
| 4 | - | - | 12,11,[10], [9], 8, 7 | 7,6,5,4 | - | - | - | - | - | - |
| 5 | - | - | 13, 12, 11,[10],9, 8, 7, 6,5,4, | - | - | - | - | - | - | - |
| 6 | - | - | [8],7 | 7,[6] | [6],5 | - | - | 7 | 7,[6],[5] | - |
**<table 10>**
| Configuration number | Sub-frame sequence number *n* | | | | | | | | | |
|---|---|---|---|---|---|---|---|---|---|---|
| | 0 | 1 | 2 | 3 | 4 | 5 | 6 | 7 | 8 | 9 |
| 0 | - | - | 6, [5] | [5],[4] | 4 | - | - | 6,(5) | [5],[4] | 4 |
| 1 | - | - | 7,6 | [6],[5],4 | - | - | - | 7,6 | [6],[5],4 | - |
| 2 | - | - | 8, 7,[5], 4, 6 | - | - | - | - | 8, 7, [5],4, 6 | - | - |
| 3 | - | - | [10],[9],[8],7, 6, 11 | 6, 5 | 5,4 | - | - | - | - | - |
| 4 | - | - | 12,[10],[9], 8, 7, 11 | 6, 5, 4, 7 | - | - | - | - | - | - |
| 5 | - | - | 13, 12, [10],9, 8, 7, 5, 4, 11, 6 | - | - | - | - | - | - | - |
| 6 | - | - | [8],7 | 7,[6] | [6],5 | - | - | 7 | 7,[6],[5] | - |

5. The method according to claim 1, wherein
, in the frame period, UL and DL sub-frames in the FD-UL carrier are indicated by a bitmap configured by high-layer signaling.

6. The method according to any of claims 1 to 5, wherein a DL sub-frame in the FD-DL carrier and a DL sub-frame or special sub-frame in the FD-UL carrier are used simultaneously.

7. The method according to claim 6, wherein the scheduling mode in the receiving data of a PDSCH and control data a PDCCH or EPDCCH indicating DL SPS release according to a scheduling mode of the FD mode comprises:
DL transmission of the FD-DL carrier and DL transmission of the FD-UL carrier are taken as two cells for processing, a DL sub-frame in the FD-DL carrier is scheduled by another DL sub-frame in the FD-DL carrier, a DL sub-frame or special sub-frame in the FD-UL carrier is cross-carrier scheduled by a DL sub-frame in the FD-DL carrier; blind detection of scheduling of DL sub-frames in the FD-DL carrier is performed for all DL sub-frames in the FD-DL carrier; blind detection of cross-carrier scheduling of DL sub-frames or special sub-frames in the FD-UL carrier is performed for a sub-frame, which is the DL sub-frame in the FD-DL carrier and is the DL sub-frame or special sub-frame in the FD-UL carrier; or
the DL transmission of the FD-DL carrier and the DL transmission of the FD-UL carrier are taken as two cells for processing, a DL sub-frame in the FD-DL carrier is scheduled by another DL sub-frame in the FD-DL carrier, a DL sub-frame or special sub-frame in the FD-UL carrier is cross-carrier scheduled by a DL sub-frame or special sub-frame in the FD-DL carrier; the blind detection of scheduling of a DL sub-frame or special sub-frame in the FD-UL carrier is performed for a DL sub-frame or special sub-frame in the FD-UL carrier; the blind detection is performed by the UE for the PDCCH or EPDCCH transmitted in the DL sub-frame in the FD-DL carrier, the blind detection is performed by the UE for the PDCCH or EPDCCH transmitted in a DL sub-frame or special sub-frame in the FD-UL carrier, a UL sub-frame in the FD-UL carrier is scheduled by the FD-DL carrier and scheduling of a UL sub-frame in the FD-UL carrier and scheduling of a DL sub-frame in the FD-DL carrier is scheduling of a same cell; or
DL sub-frames of the FD-DL carrier and the FD-UL carrier are cross-carrier scheduled by another cell, and the FD-DL carrier and the FD-UL carrier are taken as two cells for processing; or
the DL sub-frames of the FD-DL carrier and the FD-UL carrier are cross-carrier scheduled by different cells and the DL transmission of the FD-DL carrier and DL transmission of the FD-UL carrier are taken as two cells for processing; or
the FD-DL carrier and the FD-UL carrier are taken as one cell for processing, one bit is added to DL scheduling assignment, one bit may be reserved or bits in a conventional domain in the DL scheduling assignment is re-explained to indicate that the PDSCH in the FD-DL carrier or the PDSCH in the FD-UL carrier is respectively scheduled by the DL scheduling assignment.

8. The method according to claim 7, further comprising:
taking, by a soft buffer of the UE, the FD-UL carrier and the FD-DL carrier as cells with different configurations in carrier aggregation, CA, independently determining a HARQ process number of each cell according to a DL HARQ-ACK timing or reference DL HARQ-ACK timing of the each cell; or taking the FD-UL carrier and the FD-DL carrier as one virtual cell for processing and determining the maximum HARQ process number of the virtual cell according to the HARQ-ACK timing.

9. The method according to any of claims 1 to 5, wherein
as for the UE DL reception in a same subframe is only performed in one of the FD-DL carrier and the FD-UL carrier.

10. The method according to claim 9, wherein the scheduling mode in the receiving data of a PDSCH and control data a PDCCH or EPDCCH indicating DL SPS release according to a scheduling mode of the FD mode comprises:
a DL sub-frame in the FD-DL carrier is scheduled by another DL sub-frame in the FD-DL carrier, a DL sub-frame in the FD-UL carrier is scheduled by another DL sub-frame in the FD-UL carrier, blind detection is performed by the UE for the PDCCH or EPDCCH transmitted in a DL sub-frame in one of the FD-DL carrier and the FD-UL carrier and the blind detection of the scheduling of a DL sub-frame in the FD-UL carrier is only performed by the UE for the DL sub-frame in the FD-UL carrier; or
when the FD-DL carrier and the FD-UL carrier are cross-carrier scheduled by another cell, the FD-DL carrier and the FD-UL carrier are taken as one cell for processing and as for the PDCCH or EPDCCH received in each sub-frame, a scheduled PDSCH indicates whether the FD-DL carrier or the FD-UL carrier is scheduled in the each sub-frame according to high-layer signaling in a bitmap.

11. The method according to claim 10, further comprising:
taking, by a soft buffer of the UE, the FD-UL carrier and the FD-DL carrier as one virtual cell for processing, determining the maximum HARQ process number of the virtual cell according to a HARQ-ACK timing of all DL sub-frames in the FD-DL carrier, or determining the maximum HARQ process number of the virtual cell according to total HARQ process number transmitted by the UE on the PDSCH of the two carriers and a configured union set of sub-frames for transmitting DL data in the FD-DL carrier and the FD-UL carrier.

12. The method according to any of claims 1 to 5, further comprising:
receiving, by the UE, control information on the FD-DL carrier and receiving DL data except for the control information on the FD-DL carrier or the FD-UL carrier;
determining, by the UE, whether the data of the PDSCH and the control data of the PDCCH or EPDCCH indicating the DL SPS release is transmitted in a DL sub-frame in the FD-DL carrier or whether the data of the PDSCH and the control data of the PDCCH or EPDCCH indicating the DL SPS release is transmitted in a DL sub-frame in the FD-UL carrier.

13. The method according to claim 12, further comprising:
determining, by a soft buffer of the UE, the maximum HARQ process number according to a HARQ-ACK timing of the PDSCH of the FD-DL carrier if the UE only transmits data in the FD-DL carrier;
determining, by the soft buffer of the UE, the maximum HARQ process number according to the HARQ-ACK timing of the PDSCH of the FD-UL carrier if the UE only transmits the data in a DL sub-frame or special sub-frame in the FD-UL carrier.

14. An device of a user equipment, UE, comprising: a configuration module (801), a receiving module (803) and a feedback module (805); wherein
the configuration module is configured to receive configuration information, be used by the UE to work in a flexible duplex, FD, mode;
the receiving module is configured to receive data of a physical downlink shared channel, PDSCH, and control data of a physical downlink control channel, PDCCH, or enhanced physical downlink control channel, EPDCCH, indicating downlink, DL, semi-persistent scheduling, SPS, release in at least one DL sub-frames according to the FD mode; and
the feedback module is configured to transmit hybrid automatic repeat request-acknowledge, HARQ-ACK, information corresponding to the data of the PDSCH according to a HARQ-ACK timing corresponding to the data of the PDSCH,
wherein, in the FD mode, an uplink, UL, carrier and a DL carrier for frequency division duplexing, FDD, mode are respectively recorded as a FD-UL carrier and a FD-DL carrier respectively, and the configuration information indicates a sub-frame configuration of sub-frames on the FD-UL carrier, wherein
the FD mode comprises that in a frame period, some sub-frames of the FD-UL carrier are DL sub-frames or special sub-frames and all sub-frames of the FD-DL carrier are DL sub-frames; and
wherein the FD-DL carrier is used for performing DL transmission to a FDD UE and the FD-UL carrier is used for performing UL transmission to the FDD UE.

## Patentansprüche

1. Verfahren zum Kommunizieren von Daten auf einem gemeinsam genutzten physikalischen Downlink-Kanal, PDSCH, umfassend:
Empfangen (301) von Konfigurationsinformationen durch ein Benutzergerät, UE, die durch das UE verwendet werden, um in einem flexiblen Duplex, FD, - Modus zu arbeiten;
Empfangen (302) von Daten eines PDSCH und von Steuerdaten eines physikalischen Downlink-Steuerkanals, PDCCH oder eines erweiterten physikalischen Downlink-Steuerkanals, EPDCCH, durch das UE, wobei eine Downlink, DL, -semipersistente-Scheduling, SPS, -Freigabe in mindestens einem DL-Subframe gemäß dem FD-Modus angegeben wird; und
Übertragen (303) von Informationen des hybriden automatischen Wiederaufforderungsprotokolls, HARQ-ACK, entsprechend den Daten des PDSCH durch das UE gemäß einer HARQ-ACK-Zeitsteuerung entsprechend den Daten des PDSCH,
wobei im FD-Modus ein Uplink, UL, -Träger und ein DL-Träger für einen Frequenzduplexbetriebs, FDD, -Modus jeweils als ein FD-UL-Träger beziehungsweise ein FD-DL-Träger aufgezeichnet werden und die Konfigurationsinformationen eine Subframe-Konfiguration von Subframes auf dem FD-UL-Träger angeben, wobei
der FD-Modus umfasst, dass in einer Frame-Periode einige Subframes des FD-UL-Trägers DL-Subframes oder spezielle Subframes sind und alle Subframes des FD-DL-Trägers DL-Subframes sind; und
wobei der FD-DL-Träger zum Durchführen einer DL-Übertragung an ein FDD-UE verwendet wird und der FD-UL-Träger zum Durchführen einer UL-Übertragung an das FDD-UE verwendet wird.

2. Verfahren nach Anspruch 1, wobei
die Frame-Periode 10 ms beträgt, UL- und DL-Subframes im FD-UL-Träger in der Frame-Periode einer der herkömmlichen sieben Arten von TDD-UL- und DL-Konfigurationen folgen oder
der FD-UL-Träger in der Frame-Periode umfasst: 7, 8, 9 oder 10 UL-Subframes.

3. Verfahren nach Anspruch 2, wobei
eine HARQ-ACK-Zeitsteuerung von DL-Subframes im FD-UL-Träger, wenn die UL- und DL-Subframes im FD-UL-Träger einer TDD-UL- und DL-Konfiguration A in den herkömmlichen sieben Arten der TDD-UL- und DL-Konfigurationen folgen, der TDD-UL- und DL-Konfiguration A folgt;
wobei das Rückkoppeln von HARQ-ACK-Informationen gemäß einer entsprechenden HARQ-ACK-Zeitsteuerung umfasst:
Übertragen von HARQ-ACK-Informationen der DL-Subframes im FD-UL-Träger in entsprechenden UL-Subframes im FD-UL-Träger.

4. Verfahren nach Anspruch 3, wobei
der DL-Subframe m im FD-DL-Träger wie bei einem DL-Subframe m im FD-DL-Träger, wenn ein Subframe m im FD-UL-Träger der DL-Subframe oder ein spezieller Subframe ist, der HARQ-ACK-Zeitsteuerung der TDD-UL- und DL-Konfiguration A folgt und die HARQ-ACK-Zeitsteuerung umfasst: Wenn das UE die Daten des PDSCH und Steuerdaten des PDCCH oder des EPDCCH empfängt, welche die DL-SPS-Freigabe in einem Subframe, nk, im FD-DL-Träger angeben, das Rückkoppeln von HARQ-ACK-Informationen gemäß einer entsprechenden HARQ-ACK-Zeitsteuerung umfasst: Rückkoppeln der HARQ-ACK-Informationen auf einem UL-Subframe n des FD-UL-Trägers; wobei Werte von k Angaben ohne Klammern sind, wie in Tabelle 9 und 10 gezeigt; eine Konfigurationssequenznummer in Tabelle 9 und 10 eine Sequenznummer einer TDD-UL- und DL-Konfiguration des FD-UL-Trägers ist;
die HARQ-ACK-Zeitsteuerung wie bei dem DL-Subframe m im FD-DL-Träger, wenn die HARQ-ACK-Zeitsteuerung der DL-Subframes im FD-UL-Träger TDD-UL- und DL-Konfiguration 1 bis 5 folgt, wenn der Subframe m im FD-UL-Träger ein UL-Subframe ist, die HARQ-ACK-Zeitsteuerung des DL-Subframe m im FD-DL-Träger der HARQ-ACK-Zeitsteuerung eines ersten DL-Subframe hinter dem Subframe m im FD-UL-Träger folgt, umfasst: Wenn das UE die Daten des PDSCH und die Steuerdaten des PDCCH oder des EPDCCH empfängt, welche die DL-SPS-Freigabe in dem Subframe, nk, im FD-DL-Träger angeben, das Rückkoppeln von HARQ-ACK-Informationen gemäß einer entsprechenden HARQ-ACK-Zeitsteuerung umfasst: Rückkoppeln der entsprechenden HARQ-ACK-Informationen im UL-Subframe n des FD-UL-Trägers; wobei die Werte von k die Angaben ohne Klammern sind, wie in Tabelle 9 und 10 gezeigt;
das Rückkoppeln von HARQ-ACK-Informationen gemäß einer entsprechenden HARQ-ACK-Zeitsteuerung wie bei dem DL-Subframe m im FD-DL-Träger, wenn die HARQ-ACK-Zeitsteuerung der DL-Subframes im FD-UL-Träger TDD-UL- und DL-Konfiguration 0 und 6 folgt, wenn der Subframe m im FD-DL-Träger der UL-Subframe ist, die HARQ-ACK-Zeitsteuerung des DL-Subframe m im FD-DL-Träger einem Prinzip der gleichmäßigen Verteilung folgt, die DL-Subframes im FD-DL-Träger in unterschiedlichen UL-Subframes übertragen werden und das UE die Daten des PDSCH und die Steuerdaten des PDCCH oder des EPDCCH, welche die DL-SPS-Freigabe im Subframe, n-k, des FD-DL-Trägers angeben, empfängt, umfasst: Rückkoppeln der HARQ-ACK-Informationen im UL-Subframe n im FD-UL-Träger; wobei die Werte von k die Werte ohne Klammern sind, wie in Tabelle 9 und 10 gezeigt;
**<Tabelle 9>**
| Konfiguration Nummer | Subframe-Sequenznummer *n* | | | | | | | | | |
|---|---|---|---|---|---|---|---|---|---|---|
| | 0 | 1 | 2 | 3 | 4 | 5 | 6 | 7 | 8 | 9 |
| 0 | - | - | 6, [5] | [5],[4] | 4 | - | - | 6,[5] | [5],[4] | 4 |
| 1 | - | - | 7, 6 | [6],[5],4 | - | - | - | 7,6 | [6],[5],4 | - |
| 2 | - | - | 8,7,6,[5],4 | - | - | - | - | 8,7, 6 [5],4, | - | - |
| 3 | - | - | 11,[10],[9],[8],7,6 | 6, 5 | 5, 4 | - | - | - | - | - |
| 4 | - | - | 12,11,[10],[9],8,7 | 7, 6,5,4 | - | - | - | - | - | - |
| 5 | - | - | 13,12,11,[10],9,8,7, 6,5,4, | - | - | - | - | - | - | - |
| 6 | - | - | [8],7 | 7, 6] | [6],5 | - | - | 7 | 7,[6],[5] | - |
**<Tabelle 10>**
| Konfiguration Nummer | Subframe-Sequenznummer *n* | | | | | | | | | |
|---|---|---|---|---|---|---|---|---|---|---|
| | 0 | 1 | 2 | 3 | 4 | 5 | 6 | 7 | 8 | 9 |
| 0 | - | - | 6, [5] | [5],[4] | 4 | - | - | 6,[5] | [5],[4] | 4 |
| 1 | - | - | 7, 6 | [6],[5],4 | - | - | - | 7,6 | [6],[5],4 | - |
| 2 | - | - | 8,7,[5],4,6 | - | - | - | - | 8,7, [5],4,6 | - | - |
| 3 | - | - | [10],[9],[8],7,6,11 | 6, 5 | 5, 4 | - | - | - | - | - |
| 4 | - | - | 12,[10],[9],8,7,11 | 6,5,4, 7 | - | - | - | - | - | - |
| 5 | - | - | 13,12,[10],9,8,7,5, 4,11,6 | - | - | - | - | - | - | - |
| 6 | - | - | [8],7 | 7,[6] | [6],5 | - | - | 7 | 7,[6],[5] | - |

5. Verfahren nach Anspruch 1, wobei
UL- und DL-Subframes im FD-UL-Träger in der Frame-Periode durch ein Bitmap angegeben werden, das durch Hochschichtsignalisierung konfiguriert ist.

6. Verfahren nach einem der Ansprüche 1 bis 5, wobei ein DL-Subframe im FD-DL-Träger und ein DL-Subframe oder ein spezieller Subframe im FD-UL-Träger gleichzeitig verwendet werden.

7. Verfahren nach Anspruch 6, wobei der Scheduling-Modus in den Empfangsdaten eines PDSCH und Steuerdaten eines PDCCH oder eines EPDCCH, die eine DL-SPS-Freigabe gemäß einem Scheduling-Modus des FD-Modus angeben, umfasst:
Eine DL-Übertragung des FD-DL-Trägers und eine DL-Übertragung des FD-UL-Trägers werden als zwei Zellen zum Verarbeiten genommen, ein DL-Subframe im FD-DL-Träger wird durch einen anderen DL-Subframe im FD-DL-Träger eingestellt, ein DL-Subframe oder ein spezieller Subframe im FD-UL-Träger wird durch einen DL-Subframe im FD-DL-Träger trägerübergreifend eingestellt; eine Blinderkennung des Scheduling von DL-Subframes im FD-DL-Träger wird für alle DL-Subframes im FD-DL-Träger durchgeführt; eine Blinderkennung des trägerübergreifenden Scheduling von DL-Subframes oder speziellen Subframes im FD-UL-Träger wird für einen Subframe durchgeführt, welcher der DL-Subframe im FD-DL-Träger ist und der DL-Subframe oder der spezielle Subframe im FD-UL-Träger ist; oder
die DL-Übertragung des FD-DL-Trägers und die DL-Übertragung des FD-UL-Trägers werden als zwei Zellen zum Verarbeiten genommen, ein DL-Subframe im FD-DL-Träger wird durch einen anderen DL-Subframe im FD-DL-Träger eingestellt, ein DL-Subframe oder ein spezieller Subframe im FD-UL-Träger wird durch einen DL-Subframe oder einen speziellen Subframe im FD-DL-Träger trägerübergreifend eingestellt; die Blinderkennung des Scheduling eines DL-Subframe oder eines speziellen Subframe im FD-UL-Träger wird für einen DL-Subframe oder einen speziellen Subframe im FD-UL-Träger durchgeführt; die Blinderkennung wird durch das UE für den PDCCH oder den EPDCCH durchgeführt, die im DL-Subframe im FD-DL-Träger übertragen werden, die Blinderkennung wird durch das UE für den PDCCH oder den EPDCCH durchgeführt, die in einem DL-Subframe oder einem speziellen Subframe im FD-UL-Träger übertragen werden, ein UL-Subframe im FD-UL-Träger wird durch den FD-DL-Träger eingestellt und ein Scheduling eines UL-Subframe im FD-UL-Träger und ein Scheduling eines DL-Subframe im FD-DL-Träger ist ein Scheduling einer gleichen Zelle; oder
DL-Subframes des FD-DL-Trägers und des FD-UL-Trägers werden durch eine andere Zelle trägerübergreifend eingestellt und der FD-DL-Träger und der FD-UL-Träger werden als zwei Zellen zum Verarbeiten genommen; oder
die DL-Subframes des FD-DL-Trägers und des FD-UL-Trägers werden durch unterschiedliche Zellen trägerübergreifend eingestellt und die DL-Übertragung des FD-DL-Träger und die DL-Übertragung des FD-UL-Trägers werden als zwei Zellen zum Verarbeiten genommen; oder
der FD-DL-Träger und der FD-UL-Träger werden als eine Zelle zum Verarbeiten genommen, ein Bit wird zu einer DL-Scheduling-Zuordnung hinzugefügt, ein Bit kann zurückgehalten werden oder Bits werden in einer herkömmlichen Domäne bei der DL-Scheduling-Zuordnung erneut erläutert, um anzugeben, dass der PDSCH im FD-DL-Träger beziehungsweise der PDSCH im FD-UL-Träger durch die DL-Scheduling-Zuordnung eingestellt wird.

8. Verfahren nach Anspruch 7, ferner umfassend:
Nehmen des FD-UL-Trägers und des FD-DL-Trägers durch einen Soft-Puffer des UE als Zellen mit unterschiedlichen Konfigurationen bei der Trägeraggregation, CA, wobei unabhängig eine HARQ-Prozessnummer jeder Zelle gemäß einer DL-HARQ-ACK-Zeitsteuerung oder Referenz-DL-HARQ-ACK-Zeitsteuerung jeder Zelle bestimmt wird; oder Nehmen des FD-UL-Trägers und des FD-DL-Trägers als eine virtuelle Zelle zum Verarbeiten und Bestimmen der maximalen HARQ-Prozessnummer der virtuellen Zelle gemäß der HARQ-ACK-Zeitsteuerung.

9. Verfahren nach einem der Ansprüche 1 bis 5, wobei
ein DL-Empfang in einem gleichen Subframe wie bei dem UE nur in einem von dem FD-DL-Träger und dem FD-UL-Träger durchgeführt wird.

10. Verfahren nach Anspruch 9, wobei der Scheduling-Modus in den Empfangsdaten eines PDSCH und Steuerdaten eines PDCCH oder eines EPDCCH, die eine DL-SPS-Freigabe gemäß einem Scheduling-Modus des FD-Modus angeben, umfasst:
ein DL-Subframe im FD-DL-Träger wird durch einen anderen DL-Subframe im FD-DL-Träger eingestellt, ein DL-Subframe im FD-DL-Träger wird durch einen anderen DL-Subframe im FD-DL-Träger eingestellt, eine Blinderkennung wird durch das UE für den PDCCH oder den EPDCCH durchgeführt, die in einem DL-Subframe in einem von dem FD-DL-Träger und dem FD-UL-Träger übertragen werden, und die Blinderkennung des Scheduling eines DL-Subframe im FD-UL-Träger wird nur durch das UE für den DL-Subframe im FD-UL-Träger durchgeführt; oder,
wenn der FD-DL-Träger und der FD-UL-Träger durch eine andere Zelle trägerübergreifend eingestellt werden, der FD-DL-Träger und der FD-UL-Träger als eine Zelle zum Verarbeiten und als für den in jedem Subframe empfangenen PDCCH oder EPDCCH genommen werden, gibt ein eingestellter PDSCH an, ob der FD-DL-Träger oder der FD-UL-Träger in jedem Subframe gemäß der Hochschichtsignalisierung bei einem Bitmap eingestellt ist.

11. Verfahren nach Anspruch 10, ferner umfassend:
Nehmen des FD-UL-Trägers und des FD-DL-Trägers durch einen Soft-Puffer des UE als eine virtuelle Zelle zum Verarbeiten, Bestimmen der maximalen HARQ-Prozessnummer der virtuellen Zelle gemäß einer HARQ-ACK-Zeitsteuerung aller DL-Subframes im FD-DL-Träger oder Bestimmen der maximalen HARQ-Prozessnummer der virtuellen Zelle gemäß der gesamten HARQ-Prozessnummer, die durch das UE auf dem PDSCH der zwei Träger und einen konfigurierten Verbindungssatz von Subframes zum Übertragen von DL-Daten im FD-DL-Träger und dem FD-UL-Träger übertragen wird.

12. Verfahren nach einem der Ansprüche 1 bis 5, ferner umfassend:
Empfangen von Steuerinformationen auf dem FD-DL-Träger und Empfangen von DL-Daten mit Ausnahme der Steuerinformationen auf dem FD-DL-Träger oder dem FD-UL-Träger durch das UE;
Bestimmen durch das UE, ob die Daten des PDSCH und die Steuerdaten des PDCCH oder des EPDCCH, welche die DL-SPS-Freigabe angeben, in einem DL-Subframe im FD-DL-Träger übertragen werden oder ob die Daten des PDSCH und die Steuerdaten des PDCCH oder des EPDCCH, welche die DL-SPS-Freigabe angeben, in einem DL-Subframe im FD-UL-Träger übertragen werden.

13. Verfahren nach Anspruch 12, ferner umfassend:
Bestimmen der maximalen HARQ-Prozessnummer durch einen Soft-Puffer des UE gemäß einer HARQ-ACK-Zeitsteuerung des PDSCH des FD-DL-Trägers, wenn das UE nur Daten im FD-DL-Träger überträgt;
Bestimmen der maximalen HARQ-Prozessnummer durch einen Soft-Puffer des UE gemäß einer HARQ-ACK-Zeitsteuerung des PDSCH des FD-UL-Trägers, wenn das UE nur die Daten in einem DL-Subframe oder einem speziellen Subframe im FD-UL-Träger überträgt.

14. Vorrichtung eines Benutzergeräts, UE, umfassend: ein Konfigurationsmodul (801), ein Empfangsmodul (803) und ein Rückkopplungsmodul (805); wobei das Konfigurationsmodul dazu konfiguriert ist, Konfigurationsinformationen zu empfangen, die durch das Benutzergerät verwendet werden, um in einem flexiblen Duplex, FD, -Modus zu arbeiten;
das Empfangsmodul dazu konfiguriert ist, Daten eines gemeinsam genutzten physikalischen Downlink-Kanals, PDSCH, und Steuerdaten eines physikalischen Downlink-Steuerkanals, PDCCH, oder eines erweiterten physikalischen Downlink-Steuerkanals, EPDCCH, zu empfangen, wobei eine Downlink, DL, -semipersistente-Scheduling, SPS, -Freigabe in mindestens einem DL-Subframe gemäß dem FD-Modus angegeben wird; und
das Rückkopplungsmodul dazu konfiguriert ist, Informationen des hybriden automatischen Wiederaufforderungsprotokolls, HARQ-ACK, entsprechend den Daten des PDSCH gemäß einer HARQ-ACK-Zeitsteuerung entsprechend den Daten des PDSCH zu übertragen,
wobei im FD-Modus ein Uplink, UL, -Träger und ein DL-Träger für einen Frequenzduplexbetriebs, FDD, -Modus jeweils als ein FD-UL-Träger beziehungsweise ein FD-DL-Träger aufgezeichnet werden und die Konfigurationsinformationen eine Subframe-Konfiguration von Subframes auf dem FD-UL-Träger angeben, wobei
der FD-Modus umfasst, dass in einer Frame-Periode einige Subframes des FD-UL-Trägers DL-Subframes oder spezielle Subframes sind und alle Subframes des FD-DL-Trägers DL-Subframes sind; und
wobei der FD-DL-Träger zum Durchführen einer DL-Übertragung an ein FDD-UE verwendet wird und der FD-UL-Träger zum Durchführen einer UL-Übertragung an das FDD-UE verwendet wird.

## Revendications

1. Procédé de communication de données sur un canal partagé de liaison descendante physique, PDSCH, comprenant :
la réception (301), par un équipement d'utilisateur, UE, d'informations de configuration à être utilisées par l'UE pour fonctionner en mode duplex flexible, FD ;
la réception (302), par l'UE, de données d'un PDSCH et de données de commande d'un canal de commande de liaison descendante physique, PDCCH, ou canal de commande de liaison descendante physique amélioré, EPDCCH, indiquant la libération d'une planification semi-persistante, SPS, en liaison descendante, DL, dans au moins une sous-trame DL selon le mode FD ; et
la transmission (303), par l'UE, d'informations d'accusé de réception de demande de répétition automatique hybride, HARQ-ACK, correspondant aux données du PDSCH selon un minutage de HARQ-ACK correspondant aux données du PDSCH,
où, dans le mode FD, une porteuse de liaison montante, UL, et une porteuse de DL pour le mode de duplexage par répartition de fréquence, FDD, sont respectivement enregistrées comme une porteuse FD-UL et une porteuse FD-DL respectivement, et les informations de configuration indiquent une configuration de sous-trame des sous-trames sur la porteuse FD-UL, où
le mode FD comprend que, dans une période de trame, certaines sous-trames de la porteuse FD-UL sont des sous-trames DL ou des sous-trames spéciales et toutes les sous-trames de la porteuse FD-DL sont des sous-trames DL ; et
où la porteuse FD-DL est utilisée pour effectuer une transmission DL à un UE FDD et la porteuse FD-UL est utilisée pour effectuer une transmission UL à l'UE FDD.

2. Procédé selon la revendication 1, où
la période de trame est 10ms, dans la période de trame, les sous-trames UL et DL dans la porteuse FD-UL suivent l'un des sept types conventionnels de configurations de TDD UL et DL, ou
dans la période de trame, la porteuse FD-UL comprend: 7, 8, 9 ou 10 sous-trames UL.

3. Procédé selon la revendication 2, où
lorsque les sous-trames UL et DL de la porteuse FD-UL suivent une configuration TDD UL et DL A dans les sept types conventionnels de configurations de TDD UL et DL, un minutage de HARQ-ACK des sous-trames DL dans la porteuse FD-UL suit la configuration TDD UL et DL A ;
où l'envoi en retour d'informations HARQ-ACK selon un minutage de HARQ-ACK correspondant comprend :
la transmission d'informations HARQ-ACK des sous-trames DL dans la porteuse FD-UL dans des sous-trames UL correspondantes dans la porteuse FD-UL.

4. Procédé selon la revendication 3, où
comme pour une sous-trame DL m dans la porteuse FD-DL, si une sous-trame m dans la porteuse FD-UL est la sous-trame DL ou la sous-trame spéciale, la sous-trame DL m dans la porteuse FD-DL suit le minutage de HARQ-ACK de la configuration TDD UL et DL A et le minutage de HARQ-ACK comprend : si l'UE reçoit les données du PDSCH et des données de commande du PDCCH ou de l'EPDCCH indiquant la libération de la SPS DL dans une sous-trame, n-k, dans la porteuse FD-DL, l'envoi en retour d'informations HARQ-ACK selon un minutage de HARQ-ACK correspondant comprend : fournir en retour les informations HARQ-ACK sur une sous-trame UL n de la porteuse FD-UL; où les valeurs de k sont des chiffres sans parenthèses comme indiqué sur les tableaux 9 et 10 ; un numéro de séquence de configuration sur les tableaux 9 et 10 est un numéro de séquence d'une configuration TDD UL et DL de la porteuse FD-UL ;
comme pour la sous-trame DL m dans la porteuse FD-DL, lorsque le minutage de HARQ-ACK des sous-trames DL dans la porteuse FD-UL suit les configurations TDD UL et DL 1 à 5, si la sous-trame m dans la porteuse FD-UL est une sous-trame UL, le minutage de HARQ-ACK de la sous-trame DL m dans la porteuse FD-DL suit le minutage de HARQ-ACK d'une première sous-trame DL derrière la sous-trame m dans la porteuse FD-UL, le minutage de HARQ-ACK comprend : si l'UE reçoit les données du PDSCH et les données de commande du PDCCH ou de l'EPDCCH indiquant la libération de la SPS DL dans la sous-trame, n-k, dans la porteuse FD-DL, l'envoi en retour d'informations HARQ-ACK selon un minutage de HARQ-ACK correspondant comprend : l'envoi en retour des informations HARQ-ACK correspondantes dans la sous-trame UL n de la porteuse FD-UL ; où les valeurs de k sont les chiffres entre parenthèses comme indiqué sur les tableaux 9 et 10 ;
comme pour la sous-trame DL m dans la porteuse FD-DL, lorsque le minutage de HARQ-ACK des sous-trames DL dans la porteuse FD-UL suit les configurations TDD UL et DL 0 et 6, si la sous-trame m dans la porteuse FD-DL est la sous-trame UL, le minutage de HARQ-ACK de la sous-trame DL m dans la porteuse FD-DL suit un principe de répartition uniforme, les sous-trames DL dans la porteuse FD-DL sont transmises dans différentes sous-trames UL et l'UE reçoit les données du PDSCH et les données de commande du PDCCH ou de l'EPDCCH indiquant la libération de la SPS DL dans la sous-trame, n-k, de la porteuse FD-DL, l'envoi en retour d'informations HARQ-ACK selon un minutage de HARQ-ACK correspondant comprend : l'envoi en retour des informations HARQ-ACK dans la sous-trame UL n dans la porteuse FD-UL ; où les valeurs de k sont les valeurs entre parenthèses comme indiqué sur les tableaux 9 et 10;
**<tableau 9>**
| Numéro de configuration | Numéro de séquence de sous-trame *n* | | | | | | | | | |
|---|---|---|---|---|---|---|---|---|---|---|
| | 0 | 1 | 2 | 3 | 4 | 5 | 6 | 7 | 8 | 9 |
| 0 | - | - | 6, [5] | [5],[4] | 4 | - | - | 6,[5] | [5],[4] | 4 |
| 1 | - | - | 7, 6 | [6],[5],4 | - | - | - | 7, 6 | [6],[5],4 | - |
| 2 | - | - | 8, 7, 6,[5], 4 | - | - | - | - | 8, 7, 6 [5], 4, | - | - |
| 3 | - | - | 11,[10],[9],[8], 7, 6 | 6, 5 | 5, 4 | - | - | - | - | - |
| 4 | - | - | 12, 11,[10],[9], 8, 7 | 7, 6, 5, 4 | - | - | - | - | - | - |
| 5 | - | - | 13, 12, 11,[10], 9, 8, 7, 6, 5, 4, | - | - | - | - | - | - | - |
| 6 | - | - | [8],7 | 7,[6] | [6],5 | - | - | 7 | 7,[6],[5] | - |
**<tableau 10>**
| Numéro de configuration | Numéro de séquence de sous-trame *n* | | | | | | | | | |
|---|---|---|---|---|---|---|---|---|---|---|
| | 0 | 1 | 2 | 3 | 4 | 5 | 6 | 7 | 8 | 9 |
| 0 | - | - | 6, [5] | [5],[4] | 4 | - | - | 6,[5] | [5],[4] | 4 |
| 1 | - | - | 7, 6 | [6],[5],4 | - | - | - | 7, 6 | [6],[5],4 | - |
| 2 | - | - | 8, 7,[5], 4, 6 | - | - | - | - | 8, 7, [5],4, 6 | - | - |
| 3 | - | - | [10],[9],[8], 7, 6, 11 | 6, 5 | 5, 4 | - | - | - | - | - |
| 4 | - | - | 12,[10],[9], 8, 7, 11 | 6, 5, 4, 7 | - | - | - | - | - | - |
| 5 | - | - | 13, 12,[10], 9, 8, 7, 5, 4, 11, 6 | - | - | - | - | - | - | - |
| 6 | - | - | [8],7 | 7,[6] | [6],5 | - | - | 7 | 7,[6],[5] | - |

5. Procédé selon la revendication 1, où,
dans la période de trame, les sous-trames UL et DL dans la porteuse FD-UL sont indiquées par un bitmap configuré par signalisation de couche supérieure.

6. Procédé selon l'une quelconque des revendications 1 à 5, où une sous-trame DL dans la porteuse FD-DL et une sous-trame DL ou une sous-trame spéciale dans la porteuse FD-UL sont utilisées simultanément.

7. Procédé selon la revendication 6, où le mode de planification dans les données de réception d'un PDSCH et les données de commande d'un PDCCH ou d'un EPDCCH indiquant la libération d'une SPS DL selon un mode de planification du mode FD comprend :
la transmission en DL de la porteuse FD-DL et la transmission en DL de la porteuse FD-UL sont considérées comme deux cellules pour le traitement, une sous-trame DL dans la porteuse FD-DL est planifiée par une autre sous-trame DL dans la porteuse FD-DL, une sous-trame DL ou une sous-trame spéciale dans la porteuse FD-UL est planifiée d'une manière inter-porteuse par une sous-trame DL dans la porteuse FD-DL ; une détection en aveugle de la planification de sous-trames DL dans la porteuse FD-DL est effectuée pour toutes les sous-trames DL dans la porteuse FD-DL ; une détection en aveugle de la planification inter-porteuse de sous-trames DL ou de sous-trames spéciales dans la porteuse FD-UL est effectuée pour une sous-trame, qui est la sous-trame DL dans la porteuse FD-DL et qui est la sous-trame DL ou sous-trame spéciale dans la porteuse FD-UL ; ou
la transmission en DL de la porteuse FD-DL et la transmission en DL de la porteuse FD-UL sont considérées comme deux cellules pour le traitement, une sous-trame DL dans la porteuse FD-DL est planifiée par une autre sous-trame DL dans la porteuse FD-DL, une sous-trame DL ou une sous-trame spéciale dans la porteuse FD-UL est planifiée d'une manière inter-porteuse par une sous-trame DL ou une sous-trame spéciale dans la porteuse FD-DL; la détection en aveugle de la planification d'une sous-trame DL ou d'une sous-trame spéciale dans la porteuse FD-UL est effectuée pour une sous-trame DL ou une sous-trame spéciale dans la porteuse FD-UL ; la détection en aveugle est effectuée par l'UE pour le PDCCH ou l'EPDCCH transmis dans la sous-trame DL dans la porteuse FD-DL, la détection en aveugle est effectuée par l'UE pour le PDCCH ou l'EPDCCH transmis dans une sous-trame DL ou une sous-trame spéciale dans la porteuse FD-UL, une sous-trame UL dans la porteuse FD-UL est planifiée par la porteuse FD-DL et la planification d'une sous-trame UL dans la porteuse FD-UL et la planification d'une sous-trame DL dans la porteuse FD-DL est la planification d'une même cellule ; ou
des sous-trames DL de la porteuse FD-DL et de la porteuse FD-UL sont planifiées d'une manière inter-porteuse par une autre cellule, et la porteuse FD-DL et la porteuse FD-UL sont considérées comme deux cellules pour le traitement ; ou
les sous-trames DL de la porteuse FD-DL et de la porteuse FD-UL sont planifiées d'une manière inter-porteuse par des cellules différentes et la transmission en DL de la porteuse FD-DL et la transmission en DL de la porteuse FD-UL sont considérées comme deux cellules pour le traitement ; ou
la porteuse FD-DL et la porteuse FD-UL sont considérées comme une seule cellule pour le traitement, un bit est ajouté à l'attribution de planification DL, un bit peut être réservé ou des bits dans un domaine conventionnel dans l'attribution de planification DL est expliqué à nouveau pour indiquer que le PDSCH dans la porteuse FD-DL ou le PDSCH dans la porteuse FD-UL est programmé respectivement par l'attribution de planification DL.

8. Procédé selon la revendication 7, comprenant en outre :
considérer, par un tampon souple de l'UE, la porteuse FD-UL et la porteuse FD-DL comme cellules avec des configurations différentes dans une agrégation de porteuses, CA, déterminer indépendamment un nombre de processus HARQ de chaque cellule selon un minutage de HARQ-ACK DL ou un minutage de HARQ-ACK DL de référence DL de chaque cellule ; ou considérer la porteuse FD-UL et la porteuse FD-DL comme une seule cellule virtuelle pour le traitement et déterminer le nombre maximal de processus HARQ de la cellule virtuelle en fonction du minutage de HARQ-ACK.

9. Procédé selon l'une quelconque des revendications 1 à 5, où
comme pour l'UE, la réception en DL dans une même sous-trame n'est réalisée que dans une parmi la porteuse FD-DL et la porteuse FD-UL.

10. Procédé selon la revendication 9, où le mode de planification dans les données de réception d'un PDSCH et les données de commande d'un PDCCH ou d'un EPDCCH indiquant la libération de la SPS DL selon un mode de planification du mode FD comprend :
une sous-trame DL dans la porteuse FD-DL est planifiée par une autre sous-trame DL dans la porteuse FD-DL, une sous-trame DL dans la porteuse FD-UL est planifiée par une autre sous-trame DL dans la porteuse FD-UL, une détection en aveugle est effectuée par l'UE pour le PDCCH ou le EPDCCH transmis dans une sous-trame DL dans une parmi la porteuse FD-DL et la porteuse FD-UL et la détection en aveugle de la planification d'une sous-trame DL dans la porteuse FD-UL est seulement effectuée par l'UE pour la sous-trame DL dans la porteuse FD-UL ; ou
lorsque la porteuse FD-DL et la porteuse FD-UL sont planifiées de manière inter-porteuse par une autre cellule, la porteuse FD-DL et la porteuse FD-UL sont considérées comme une seule cellule pour le traitement et, comme le PDCCH ou le EPDCCH reçu dans chaque sous-trame, un PDSCH planifié indique si la porteuse FD-DL ou la porteuse FD-UL est planifiée dans chaque sous-trame en fonction de la signalisation de couche supérieure dans un bitmap.

11. Procédé selon la revendication 10, comprenant en outre :
prendre, par un tampon souple de l'UE, la porteuse FD-UL et la porteuse FD-DL comme une seule cellule virtuelle pour le traitement, déterminer le nombre maximal de processus HARQ de la cellule virtuelle selon un minutage de HARQ-ACK de toutes les sous-trames DL dans la porteuse FD-DL, ou déterminer le nombre maximal de processus HARQ de la cellule virtuelle selon nombre total de processus HARQ transmis par l'UE sur le PDSCH des deux porteuses et un ensemble d'union de sous-trames configuré pour la transmission de données en DL dans la porteuse FD-DL et la porteuse FD-UL.

12. Procédé selon l'une quelconque des revendications 1 à 5, comprenant en outre :
recevoir, par l'UE, des informations de commande sur la porteuse FD-DL et recevoir des données en DL à l'exception des informations de commande sur la porteuse FD-DL ou la porteuse FD-UL ;
déterminer, par l'UE, si les données du PDSCH et les données de commande du PDCCH ou de l'EPDCCH indiquant la libération de la SPS DL sont transmises dans une sous-trame DL dans la porteuse FD-DL ou si les données du PDSCH et les données de commande du PDCCH ou de l'EPDCCH indiquant la libération de la SPS DL sont transmises dans une sous-trame DL dans la porteuse FD-UL.

13. Procédé selon la revendication 12, comprenant en outre :
déterminer, par un tampon souple de l'UE, le nombre maximal de processus HARQ selon un minutage de HARQ-ACK du PDSCH de la porteuse FD-DL si l'UE transmet seulement des données dans la porteuse FD-DL ;
déterminer, par le tampon souple de l'UE, le nombre maximal de processus HARQ selon le minutage de HARQ-ACK du PDSCH de la porteuse FD-UL si l'UE transmet seulement les données dans une sous-trame DL ou sous-trame spéciale dans la porteuse FD-UL.

14. Dispositif d'un équipement d'utilisateur, UE, comprenant: un module de configuration (801), un module de réception (803) et un module de retour d'information (805) ; où
le module de configuration est configuré pour recevoir des informations de configuration à être utilisés par l'UE pour fonctionner dans un mode duplex flexible, FD;
le module de réception est configuré pour recevoir des données d'un canal partagé de liaison descendante physique, PDSCH, et des données de commande d'un canal de commande de liaison descendante physique, PDCCH, ou d'un canal de commande de liaison descendante physique amélioré, EPDCCH, indiquant la libération d'une planification semi-persistante, SPS, en liaison descendante, DL, dans au moins une sous-trame DL selon le mode FD; et
le module de retour d'information est configuré pour transmettre des informations d'accusé de réception de demande de répétition automatique hybride, HARQ-ACK, correspondant aux données du PDSCH selon un minutage de HARQ-ACK correspondant aux données du PDSCH,
où, dans le mode FD, une porteuse de liaison montante, UL, et une porteuse de DL pour le mode de duplexage par répartition de fréquence, FDD, sont respectivement enregistrées comme une porteuse FD-UL et une porteuse FD-DL respectivement, et les informations de configuration indiquent une configuration de sous-trame des sous-trames sur la porteuse FD-UL, où
le mode FD comprend que, dans une période de trame, certaines sous-trames de la porteuse FD-UL sont des sous-trames DL ou des sous-trames spéciales et toutes les sous-trames de la porteuse FD-DL sont des sous-trames DL ; et
où la porteuse FD-DL est utilisée pour effectuer une transmission DL à un UE FDD et la porteuse FD-UL est utilisée pour effectuer une transmission UL à l'UE FDD.
